(19) Europäisches Patentamt
European Patent Office
Office européen des brevets

(11)  **EP 2 214 125 B1**

(12)  **EUROPEAN PATENT SPECIFICATION**

(45)  Date of publication and mention
of the grant of the patent:
**20.06.2012 Bulletin 2012/25**

(21)  Application number: **08842547.5**

(22)  Date of filing: **24.10.2008**

(51)  Int Cl.:
$G06T\ 7/00$ (2006.01)   $G06K\ 9/46$ (2006.01)
$G06K\ 9/52$ (2006.01)   $G06T\ 5/00$ (2006.01)
$G06T\ 9/00$ (2006.01)

(86)  International application number:
**PCT/ES2008/070195**

(87)  International publication number:
**WO 2009/053516 (30.04.2009 Gazette 2009/18)**

(54)  **METHOD AND SYSTEM FOR THE ANALYSIS OF SINGULARITIES IN DIGITAL SIGNALS**

VERFAHREN UND SYSTEM ZUR ANALYSE VON SINGULARITÄTEN IN DIGITALEN SIGNALEN

PROCÉDÉ ET SYSTÈME D'ANALYSE DE SINGULARITÉS DE SIGNAUX NUMÉRIQUES

(84)  Designated Contracting States:
**AT BE BG CH CY CZ DE DK EE ES FI FR GB GR HR HU IE IS IT LI LT LU LV MC MT NL NO PL PT RO SE SI SK TR**

(30)  Priority: **26.10.2007 ES 200702829**

(43)  Date of publication of application:
**04.08.2010 Bulletin 2010/31**

(73)  Proprietor: **Turiel Martínez, Antonio María
08003 Barcelona (ES)**

(72)  Inventor: **Turiel Martínez, Antonio María
08003 Barcelona (ES)**

(74)  Representative: **Pons Ariño, Angel
Glorieta Ruben Dario 4
28010 Madrid (ES)**

(56)  References cited:
**EP-A1- 0 469 986      WO-A1-98/11728
US-A1- 2006 257 028      US-B1- 6 745 129**

• **ANTONIO TURIEL ET AL: "Reconstructing Images From Their MostSingular Fractal Manifold" IEEE TRANSACTIONS ON IMAGE PROCESSING, IEEE SERVICE CENTER, PISCATAWAY, NJ, US, vol. 11, no. 4, 1 April 2002 (2002-04-01), XP011074255 ISSN: 1057-7149**

EP 2 214 125 B1

**Description**

## FIELD OF THE INVENTION

This invention relates to the analysis of digital signals of physical phenomena, in other words, signals that are sampled at regular intervals, applying wavelet analysis for implementation of the proposed method, which makes it possible to identify various subsets of particular points in space to a scale and position that is more informative about the signal than others.

The invention likewise relates to a system for the implementation of the proposed method.

Throughout this description a digital signal shall be understood as any structured collection of data uniformly sampled that may be represented by means of a multidimensional matrix whose positions are referred to as signal points.

The invention provides useful techniques and tools for processing, reconstructing and compressing digital signals based on partial information regarding their gradient and in particular operating on the basis of gradient-based measurements obtained through finite increases. Said techniques and tools can be implemented by means of automatic algorithms materialised advantageously in computer programs that can be run in computational environments.

The invention, given the great efficiency that it provides mainly in digital signal reconstruction tasks, in particular those representing images, is applicable in numerous fields, among which as specific applications one could mention digital signal compression (including image compression) and the evaluation of flow lines in fluid-related signals (including determination of current lines in images representing physical phenomena); and as more general applications, the detection of structures and recognition of patterns in images of real environments, such as photographic, geophysical, biomedical and other types of images.

The invention concerns signals defined in any number of dimensions, although once the method has been described for a certain number of dimensions (for example, two), it will be fairly obvious for an expert in the art to generalise it to signals defined in any number of dimensions. For this reason, and for the purposes of simplicity, many of the equations and derivatives presented throughout this description have been written for 2D, in other words two-dimensional signals, likely to constitute elements such as images. However, useful results have also been obtained in other numbers of dimensions and in particular in the processing of 1D signals.

## BACKGROUND OF THE INVENTION

Patents US-A-5901249, US-A-6141452 and US-A-6865291 relate to digital signal compression techniques using wavelet analysis.

Patent US-A-6434261 describes a method for the detection and segmentation of digital images in order to locate targets in said images based on determination of an adaptive threshold to carry out a wavelet analysis of the digital images that are decomposed into different scale channels.

Patent US-A-7181056 concerns a method for the automatic detection of regions of interest in a digital image representing at least one portion of biological tissue, wherein a wavelet-based representation is generated of the regions to be explored.

Patent US-A-7062085 relates to a method for detecting aspects in regions of colour images where reference is made to texture characteristics materialised through coefficients derived from a wavelet transform based on a multiresolution analysis of the colour digital image.

Patent application US-A-2005/0259889 relates to a method for denoising an X-ray image comprising the application of a complex wavelet transform to the image bearing the motif, operating with wavelet coefficients in order to reduce the noise.

Patent application WO-A-2004/068410 concerns a method for detecting points of interest in a digital image which implements a wavelet transform, by associating a subsampled image with an original image.

The analysis of singularity (see reference [14]) which implements the concept of describing the local behaviour of a function f(x) estimated in $R^m$ and defined over $R^d$ around each of its domain points x in accordance with the so-called Hölder singularity exponent, or Hurst exponent, denoted by h(x), is very useful for many signal processing tasks, and in particular, is very relevant for compression purposes and as a pattern recognition tool, and, depending on the context, can also be used to reveal information regarding the evolution and dynamic of complex signals.

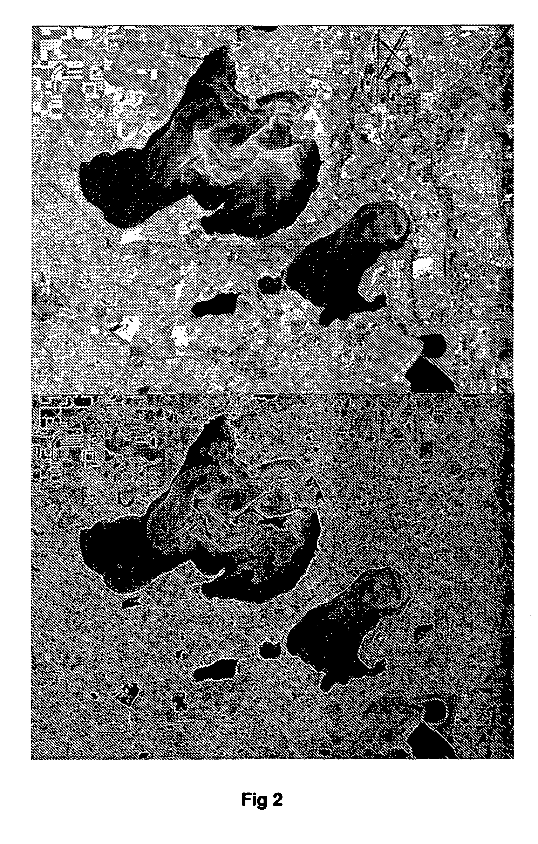

Patent US-A-6745129 concerns a method based on wavelets for the analysis of singularities in seismic data based on the processing of a representative time series of a record of the phenomenon. The object of this patent is to calculate the Hölder exponent over seismic records through a continuous wavelet transform. Using this method, when the signal is analysed (as shown in said patent's Figure 2b ), instabilities occur that affect both spatial resolution as well as the quality of determination of the Hölder exponent for each point (see discussion of this issue in reference [11]). This problem in fact makes it impossible to use the method of US-A-6745129 for tasks of digital signal reconstruction, unlike the proposals of the method of this invention. This invention provides a more accurate determination of the singularity exponents, both in terms of their position, as well as their value. The difference in accuracy between this invention and US-A-6745129 is due to the use of gradient measurements (which eliminates the undesirable fluctuations associated to complex wavelets, see reference [17]) and also because said measurement incorporates an indicator of the degree of reconstructibility. In accordance with the above, this invention also makes it possible to reconstruct a high quality signal based on partial information, unlike the method of patent US-A-6745129 (see reference [11]).

Within the field of wavelet based signal analysis, applied in particular to digital signal processing one of the most commonly used methods is the so-called Wavelet Transform Modulus Maxima (known as WTMM) which is determined by the local maxima of the wavelet projections. Mallat and Zhong (see references [4], [5] and [6]) surmised that this set can be used to reconstruct the signal completely. Subsequently it has been verified that the set leads to an attenuated signal and that various empirical coefficients have to be introduced in order to be able to reproduce the correct signal amplitudes. Ever since publication of the document by Mallat and Zhong, there have been several attempts to obtain high quality reconstruction based on WTMM. In any case, what is most interesting about the WTMM method is that in the case of images the highest quantity of lines is concentrated around the borders and contours; and since it has been known for years (see reference [7]) that borders and contours contain most of the information about a visual scene, WTMM has proven itself to be a good candidate for extracting perceptual information (borders) using an automatic canonical algorithm based on said method.

Another branch of research also focused on the use of WTMM was initiated by Arneodo and collaborators (see references [1] and [2]) who recognised the capacity of WTMM to deal with multiscale signals, centring their studies on systems known to present scale invariance properties, such as turbulent flows and chaotic systems.

The main inconvenience of all WTMM-based proposals is the impossibility to systematically extract the maxima when these accumulate (topologically), a situation that occurs whenever dealing with real signals, as discussed in [17]. In [10] the problem was studied and partial solutions were proposed.

Aside from the use of WTMM, this field of the technique is aware of recent research by this inventor, A. Turiel, regarding the analysis of singularities based on gradient measurements. In these works, a gradient measurement $\mu$ associated to a signal $s(x)$ over an arbitrary set $A$ is defined as the integral of the gradient module over that set:

$$\mu(A) = \int_A dx\, |\nabla s|(x) \tag{1}$$

This research by A. Turiel shows that when working with real data, discretised and with noise, it is necessary to operate with wavelet transforms of the measurements in the following manner: given a wavelet $\Psi$, the wavelet transform of gradient measurement $\mu$ at a scale r and at a point $x$ is given by the expression:

$$T_\Psi \mu(\mathbf{x}, r) \equiv \int d\mu(\mathbf{x}') \frac{1}{r^d} \Psi\left(\frac{\mathbf{x} - \mathbf{x}'}{r}\right) \tag{2}$$

where d is the signal dimension.

The wavelet transform of measure $\mu$ makes it possible to determine the local singularity exponent, since the dominant term when $r$ is small depends on r as a power law (see reference [14])

$$T_\Psi \mu(\mathbf{x}, r) = \alpha_\Psi(\mathbf{x})\, r^{h(\mathbf{x})} + o\left(r^{h(\mathbf{x})}\right) \tag{3}$$

By introducing gradient measurements it is possible to improve the spatial resolution of the singularity exponents (see references [11] and [14]). In this way, instead of having a singularity exponent every ten pixels or requiring control of oscillations due to the wavelet, it is possible to assign a singularity exponent to every pixel with a minimum dispersion of the point. It is appreciated that there are differences in the resolution capacities of the different wavelets, meaning that the need to find an optimised wavelet suitable for dealing with discretised data has been recognised.

An important element in the construction of wavelets with a capacity for optimised resolution is the concept of reconstructing signals using partial information regarding their gradient. The theoretical approaches and practical implementations of a gradient reconstruction algorithm appear in reference [12], which introduces a discussion regarding the structure of multifractal signals (see references [8], [3] on the multifractal structure of turbulent fluids). For signals with a multifractal structure, the set associated to the upper vertex of the hierarchy is well known, at least from a theoretical point of view, and is known as the Most Singular Manifold (MSM), which is the set comprising the points with the most singular (in other words, most negative) values of *h(x)*.

Reference [12] mentioned above maintains the theory that MSM contains sufficient information to reconstruct the signal completely, analysing the reconstruction of images although the formulae are valid for any number of dimensions. The reconstruction formula obtained in [12] for infinitely large domains is as follows:

$$s(\mathbf{x}) = (\vec{g} \cdot \nabla_{\mathcal{F}_\infty} s)(\mathbf{x})$$

$$(4)$$

where:

- s is a given signal,

- $\mathcal{F}_\infty$ is the most singular manifold or MSM of said signal s

- $\nabla_{\mathcal{F}_\infty} s(\mathbf{x}) = \left( \partial_{x,\mathcal{F}_\infty} s(\mathbf{x}), \partial_{y,\mathcal{F}_\infty} s(\mathbf{x}) \right)$ is the essential gradient vector of s, in other words, the gradient restricted to the MSM, whose components are $\partial_{x,\mathcal{F}_\infty} s(\mathbf{x}) = \partial_x s(\mathbf{x}) \quad \text{si} \quad \mathbf{x} \in \mathcal{F}_\infty$ ,

$\partial_{x,\mathcal{F}_\infty} s(\mathbf{x}) = 0 \quad \text{si} \quad \mathbf{x} \notin \mathcal{F}_\infty$ ; $\qquad \partial_{y,\mathcal{F}_\infty} s(\mathbf{x}) = \partial_y s(\mathbf{x}) \quad \text{si} \quad \mathbf{x} \in \mathcal{F}_\infty$ ,

$\partial_{y,\mathcal{F}_\infty} s(\mathbf{x}) = 0 \quad \text{si} \quad \mathbf{x} \notin \mathcal{F}_\infty$

- $\vec{g}(x) = (g_x(x), g_y(x))$ is the vectorial kernel of universal reconstruction, which in the Fourier space is given by the expression:

$$\hat{\vec{g}}(\mathbf{k}) = i \frac{\mathbf{k}}{k^2}$$

and

- notation • means the convolution scalar product, in other words,

$(\vec{g} \cdot \nabla_{\mathcal{F}_\infty} s)(\mathbf{x}) = (g_x * \partial_{x,\mathcal{F}_\infty} s)(\mathbf{x}) + (g_y * \partial_{y,\mathcal{F}_\infty} s)(\mathbf{x})$ where * means the ordinary convolution product of functions.

From the studies carried out by this inventor (see reference [12]) taking gradient measurements into consideration, it has been concluded that, if one exists, there is only one possible algorithm for reconstructing signals using the gradient based on MSM in infinitely large domains. Likewise, it is known that MSM leads to very good reconstructions with this algorithm (see references [11] and [12] for images, and [15] , [16] for time series).

The article "Reconstructing Images from their Most Singular Fractal Manifold", [TURIEL, Antonio et al.; IEEE Transactions on image processing, IEEE Service Center, Piscataway, NJ, US, vol 11, n⁰ 4, April 1st, 2002; XP0111074255] describes a method to reconstruct a real world image using the gradient over its MSM (most singular manifold).

## BRIEF DESCRIPTION OF THE INVENTION

This invention is defined by the appended claims and proposes an approach for the analysis of singularities in digital signals of physical phenomena, which comprises

a) determining a first-neighbour environment $C$ for each point of the signal; and

b) calculating for each point of the signal $x$ a reconstructibility or reconstruction capacity measurement provided by the environment $C$ (which we will refer to, indiscriminately, as "singularity measurement") based on the abovementioned environment, constructed from inference of the signal's value at $x$ according to the value of the signal at the points of said environment of $x$ using the reconstruction function explained in reference [12] and indicated in formula (4) above, but adapted to the environment, in such a way that a singularity measurement is obtained that contains the difference between the measured value of the point and the value inferred from its environment.

The proposed method also comprises advantageously a third stage c) wherein at least one logarithmic transformation is carried out on said reconstructibility measurement which suppresses the measurement's dependence on the total number of points of the signal, thus obtaining a singularity exponent for each point of the signal.

In an improved embodiment, the proposed method comprises the following stages:

a1) obtaining a stable derivative function of a digital signal, which is sampled at regular intervals;

b1) obtaining for each point of said digital signal, a singularity measurement of the function at that point, weighting the contributions of a local environment of the point (using a reconstruction function as indicated previously) and the value of the derivative at all points of said local environment, and

c1) carrying out at least one logarithmic transformation on said singularity measurement with a view to obtaining an independent measurement of the amplitude of the sampled digital signal and that varies in a controlled manner under changes in resolution.

The invention also comprises the generalisation of the singularity measurement as described under the preceding background heading, by proposing a new singularity measurement based on the set or manifold of unpredictable points, UPM in its English acronym; in other words, one starts out by considering the grouping of all unpredictable points, as against the other points that are predictable.

## DETAILED DESCRIPTION OF THE INVENTION

The object of this invention, as indicated in the previous section, comprises the calculation of a reconstructibility measurement in order to calculate accurately the singularity exponents of digital signals of physical phenomena, and for said exponents to enable obtaining high quality reconstructions. The basic requirements for defining a singularity measurement $\mu$ based on the unpredictable points manifold UPM are as follows:

i) Measurement $\mu$ must refer to the local singular behaviour of the functions.

ii) Measurement $\mu$ must lead to a more singular manifold MSM as close to the unpredictable points manifold UPM as possible.

The measurements of the unpredictable points manifold are singularity measurements that also take into account the level of predictability of the points according to the equation

$$\mathrm{div}\left(\nabla_{\mathcal{F}^c} s\right) = 0 \tag{5}$$

where $F$ is the UPM and the superscript "c" denotes the complementary set, in other words, the predictable points; this equation (5) is a consequence of equation (4) as described in [12]. Therefore, equation (5) shows that the divergence of the gradient taken only over the predictable pints is cancelled out.

The inventor proposes herein that the best way of continuing to work with singularities is to define the measurements based on the set of unpredictable points as wavelet projections of standard gradient measurements. In this way, the measurement of the set of unpredictable points is a wavelet projection of the gradient measurement expressly designed to penalise unpredictability. This entails generalising the concept of wavelet projection, with a view to producing wavelet projections with vectorial values. The use of wavelet projections with vectorial values has been well known for some time and does not introduce special complexities into the way of approaching the problem.

Another main difference in relation to the standard singularity analysis described in the abovementioned background is that the proposal of this invention does not carry out wavelet projections of the singularity measurement on various scales $r$ in order to extract the singularity exponents by means of a logarithmic regression applied to the equation (3).

$$T_\Psi \mu(\mathbf{x}, r) = \alpha_\Psi(\mathbf{x}) r^{h(\mathbf{x})} + o\left(r^{h(\mathbf{x})}\right) \tag{6}$$

One must highlight that projecting the measurement on a wavelet at various scales is costly in computation time and only serves to improve the resolution of less singular structures at the expense of worsening the more singular ones (see the arguments in this respect in reference [17]). Given that the fundamental objective in relation to this invention is to extract the most singular structures, it is detrimental to carry out the projections across multiple scales; instead, the proposal is to use a point estimator (see references [17], [9]) of the singularity exponents, namely:

$$h(x) = \frac{\log(T_\Psi \mu(x, r_0) / \{T_\Psi \mu(\cdot, r_0)\})}{\log r_0} + o\left(\frac{1}{\log r_0}\right) \tag{7}$$

where $\{T_\Psi \mu(\cdot, r_0)\}$ is the wavelet projection measurement across the entire signal and serves to decrease the relative amplitude of the correction $o(1/\log r_0)$. In applying the equation (7), $r_0$ must be sufficiently small to disregard this correction. The scale $r_0$ is defined as the least accessible, in other words, the scale of one pixel. Conventionally a Lebesgue measurement of 1 is applied to the entire spatial domain, meaning that, in the case of an image of N × M pixels, the value of $r_0$ would be set at:

$$r_0 = \frac{1}{\sqrt{NM}} \tag{8}$$

thus, in general, sufficiently large images are required to make the first term on the right hand side of the equation (7) a good approximation to the singularity exponent. This typically implies having images of at least 100 pixels in one of the directions.

An important aspect of this invention lies in the design of digital wavelets in order to implement singularity measurements based on unpredictable points manifold. Below two implementations of measurements based on unpredictable points manifold of this type are presented, which provide a good result in practical applications. The design is oriented, overall, at the processing of digital signals and, consequently, the wavelets are defined (implicitly) by means of numerical weights, although the presentation is based on a theory and is easy to generalise to a continuous scheme.

Another important element of the proposed method lies in the way of defining and/or establishing numerical estimations of the gradient ∇s so that the reconstruction is numerically stable. To do this, two possible options are suggested: differences of one pixel or point to the right and differences of half a pixel, in other words, the differences in value when moving one position to the right in the first instance, or the interpolation equivalent to the difference that would be obtained by moving half a position to the right and to the left of the point in the second instance. Both are defined by the derivative cores described in the Fourier space.

In other words, the stable derivative of stage a1) of the method, mentioned above, is obtained derived from increases to the right of one point or centred of half a point.

In the formulae that follow, $\partial_x$ will be characterised, although the characterisation of $\partial_y$ is analogous. This operator acts on a digital signal by simply multiplying the signal's Fourier transform by the derivative cores, and then anti-transforming the result. It is assumed that there are $N_x$ pixels or points in direction $x$ and $N_y$ in direction $y$.

Difference of one pixel/point to the right:

$$\left(\hat{\partial}_x\right)_n = \left( e^{2\pi i \cdot \frac{n}{N_x}} - 1 \right) \qquad (9)$$

Difference of half a pixel/point:

$$\left(\hat{\partial}_x\right)_n = \begin{cases} i \sin\left(\pi \frac{n}{N_x}\right) & ; \quad n < N_x/2 \\ -i \sin\left(\pi \frac{N_x - n}{N_x}\right) & ; \quad n \geq N_x/2 \end{cases} \qquad (10)$$

Another basic aspect of the proposed method consists of introducing the new concept of the cross Fourier transform. In order to estimate the level of predictability of a given point, a reconstruction formula is applied, which is expressed by the following equation

$$s(\mathbf{x}) = \left( g \cdot \nabla_{\!c} s \right)(\mathbf{x}) \qquad (11)$$

for the least possible number of neighbours of a point, specifically its first neighbours which constitute the set $^C$. It should be noticed that $^C$ is not the MSM $\mathcal{F}_\infty$ ; points in $^C$ are included if they are neighbours of the point $x$, disregarding the value of the singularity exponents on them. In 2D (where d is the signal dimension; therefore, $d = 2$ in this case) it consists of 4 neighbouring points, which, together with the original point, form a cross. For any quantity $p(x)$ the neighbours of any point $x_0$ are represented by means of a 5-component vector comprising said point and its four closest neighbours, following the indexation convention indicated in the following drawing, which illustrates in schematic outline the indexation of the points of the cross in 2D. In this way, the central point will be assigned index 0, the point to its right index 1, the point to its left index 2, the point above index 3 and the point below index 4. Thus, the first neighbour environment of the point under study becomes vector $(p_0, p_1, p_2, p_3, p_4)$.

|  | $p_3$ |  |
|---|---|---|
| $p_2$ | $p_0$ | $p_1$ |
|  | $p_4$ |  |

In other words, in respect of the centre of the cross, the position of all other points corresponds to shifts of $\pm 1$ (in units of one point) either in direction $x$ or in direction $y$. In order to define a Fourier transform specialised or adapted to this cross configuration, one must taken into account that the basic Nyquist frequency in each direction is $2\pi/3$. In order to simplify the notation, the basic complex element $\zeta$ is introduced:

$$\zeta = \zeta_R + i\zeta_I = e^{2\pi i/3} = \cos(2\pi/3) + i\sin(2\pi/3) \qquad (12)$$

According to the invention, the direct cross Fourier transform of any 5-component vector $\vec{p}=(p_0,p_1,p_2,p_3,p_4)$ is defined as the complex T-component vector

$$\hat{\vec{p}} = (\hat{p}_0, \hat{p}_1, \hat{p}_2, \hat{p}_3, \hat{p}_4)$$

obtained from the following formula:

$$\hat{\vec{p}} = F\vec{p} \qquad (13)$$

where F is the following complex matrix of 5 x 5:

$$F = \frac{1}{3}\begin{pmatrix} 1 & 1 & 1 & 1 & 1 \\ 1 & \zeta & \zeta* & 1 & 1 \\ 1 & \zeta* & \zeta & 1 & 1 \\ 1 & 1 & 1 & \zeta & \zeta* \\ 1 & 1 & 1 & \zeta* & \zeta \end{pmatrix} \qquad (14)$$

This matrix represents the linear combination of the harmonics associated to the shifts in the cross and is designed to represent as faithfully as possible the composition in the centre of the cross, based on the nearest points. The inverse of this matrix can be easily calculated,

$$F^{-1} = \begin{pmatrix} -1 & 1 & 1 & 1 & 1 \\ 1 & \zeta* & \zeta & 0 & 0 \\ 1 & \zeta & \zeta* & 0 & 0 \\ 1 & 0 & 0 & \zeta* & \zeta \\ 1 & 0 & 0 & \zeta & \zeta* \end{pmatrix} \qquad (15)$$

and this last matrix is necessary in order to carry out the anti-cross Fourier transform.

It is necessary to define implementations of the gradient and the reconstruction formula restricted to the cross, in order to rapidly evaluate the level of predictability of the central point according to its neighbours. For this reason, this invention proposes suitable implementations of the gradient and of the reconstruction formula of said gradient, on the basis of the cross Fourier transform.

A first implementation is that of the cross gradient operator in local gradient operator functions, which is operator

$$(\partial_x, \partial_y) = F^{-1} \cdot (\hat{\partial}_x, \hat{\partial}_y) \cdot F .$$

. In the Fourier space, said operator acts simply by multiplying any function by functions

$$\hat{\partial}_x$$

and

$$\hat{\partial}_y$$

in order to obtain coordinates *x* and *y*, respectively. Function

$$\hat{\partial}_x$$

is defined for cross environments as follows:

$$\hat{\partial}_x = (0, i\sqrt{3}, -i\sqrt{3}, 0, 0) \tag{16}$$

and, similarly, we have:

$$\hat{\partial}_y = (0, 0, 0, i\sqrt{3}, -i\sqrt{3}) \tag{17}$$

which are defined in such a way as to represent differences of half a pixel; in fact $\sqrt{3} = 2\sin(\pi/3)$.

A second implementation is that of the cross reconstruction operator, which is one of the inverses of the cross gradient operator. Since the gradient operator eliminates any constant added to each component of the 5-component vector representing the neighbours, the reconstruction is fully defined except by a change in that constant; our proposed implementation of the cross reconstruction operator is such that the resulting 5-component vector has a zero mean, $\sum_{i=0}^{4} p_i = 0$. For this reason, the signals must have the mean subtracted before applying these two operators. To this effect the elements of the matrix of the first line of the Fourier transform are applied in inverse cross so as not to introduce harmonics when the reconstruction operator is applied. Since the sum of the elements of that first line is (2 $\times$ *d*) - 1 (whose result is 3 in the case of 2D signals), in order to subtract the mean all the values of the environment vector (first neighbours) are added up and divided by ((2 $\times$ *d*) -1), adding to the result the first component of the environment vector and subtracting the other components.

$$R = F^{-1} \cdot \hat{R} \cdot F.$$

The cross reconstruction is the operator In the Fourier space $\hat{R}$ has two functional components,

$$\hat{R} = (\hat{R}_x, \hat{R}_y);$$

the operator acts as the sum of the product of each component with the corresponding

$$\hat{R}_x$$

component ($x$ and $y$) of the gradient on which it operates. The component is defined for a cross environment as follows:

$$\hat{R}_x = (0, -i/\sqrt{3}, i/\sqrt{3}, 0, 0) \tag{18}$$

and, similarly for

$$\hat{R}_y,$$

$$\hat{R}_y = (0, 0, 0, -i/\sqrt{3}, i/\sqrt{3}) \tag{19}$$

In this way, the singularity measurement defined in stage b1) of the method of this invention can be described by means of the following steps for a generic signal defined in a space of arbitrary dimension $d$:

- the environment of the ($2 \times d$) first neighbours of a base point $x$ is extracted, obtaining the first neighbours of point $x$, consecutively modifying each one and only one of the coordinate indices of said point $x$, first by adding -1 and then by adding +1, forming a vector of ($2 \times d$)+1 components, whose first component is the value of the signal at point $x$, the second the value of the signal at the point obtained by modifying the first coordinate through adding -1, the third the value of the signal at the point obtained by modifying the first coordinate through adding +1, the fourth the value of the signal at the point obtained by modifying the second coordinate through adding -1 and so on successively;
- the tendency of this vector is extracted, which is defined as the sum of its values divided by (($2 \times d$)-1) and this tendency is applied to the vector, adding it to the component referring to base point $x$ and subtracting it from the other components, so that in this way the new vector obtained has zero mean;
- a local gradient operator is applied to the abovementioned zero mean vector, which returns ($2 \times d$)+1 gradient vectors each one of them of d components, which define the local gradient:
- the components of said local gradient associated to point $x$ are cancelled out;
- the local gradient, with the cancelled out components, is applied a reconstruction operator associated unequivocally to the abovementioned local gradient operator obtaining a vector of ($2 \times d$)+1 components, referred to as estimated signal;
- once more the local gradient operator is applied to said vector of ($2 \times d$)+1 components or estimated signal and ($2 \times d$)+1 vectors of $d$ components are obtained, which define the estimated local gradient;
- ($2 \times d$)+1 vectors of $d$ components are obtained, which express the difference in gradients between said local gradient and said estimated local gradient, and from these ($2 \times d$) +1 vectors of difference in gradient the singularity measurement associated to point $x$ is obtained.

The cross gradient and cross reconstruction operators are two of the procedures included in this invention capable of implementation by means of basic algorithms materialised advantageously in computer programs that can be run in a computational environment, for the design and calculation of singularity measurements based on unpredictable point manifolds. In particular such programs or parts thereof may be included in routines stored in microprocessors or microchips. These operators can be simplified to a matrix form of (($2 \times d$)+1) x (($2 \times d$)+1), for faster numerical implementation.

Below two singularity measurements are described designed in accordance with the principles of this invention:

- local correlation singularity measurement (*lcsm*); and
- global correlation singularity measurement (*gcsm*)

Both measurements can be implemented by means of specific algorithms materialised advantageously in computer programs that can be run in a computational environment. In particular such programs or parts thereof may be included in routines stored in microprocessors or microchips.

The local correlation singularity measurement has been conceived in order to measure the unpredictability of a given point, simply by calculating the difference between the real value of the signal without mean (in other words, once the mean has been eliminated) at a given joint and the value inferred on the basis of its four neighbours (when $d=2$). The purpose of this measurement is to evaluate $T_{\Psi lcsm} \mu(x_0, r_0)$ at a given point $x_0$ and in the case $d=2$ comprises the following steps:

1. The neighbours of $x_0$ are converted into a 5-component vector $\vec{s} = (s_0, s_1, s_2, s_3, s_4)$ following the cross indexation scheme of the drawing shown above.

2. The vector is appropriately rectified: in the first instance obtaining $\overline{S} = \frac{1}{3} \sum_{i=1}^{s} s_i$, and the rectified vector, $\vec{p} = (p_0, p_1, p_2, p_3, p_4)$, is defined as:

$$p_0 = s_0 + \overline{S}$$

$$p_i = s_0 - \overline{S}, \quad i = 1,...,4 \qquad (20)$$

3. The cross gradient operator is applied to $\vec{p}$ in order to obtain vectors $\vec{g}_x$ and $\vec{g}_y$.

4. The value of the components associated to index 0 of said vectors is preserved for subsequent use, $A_x = g_{x,0}$, $A_y = g_{y,0}$.

5. Said two components are adjusted to zero, $g_{x,0} = g_{y,0} = 0$.

6. The cross reconstruction operator is applied to the resulting vectors $\vec{g}_x$ and $\vec{g}_y$, in order to obtain the reconstructed signal $\vec{r}$.

7. The cross gradient operator is applied once more to $\vec{r}$ in order to obtain the estimated gradients $\vec{\rho}_x$ and $\vec{\rho}_y$.

8. The local correlation singularity measurement is defined as the module of the difference of the cross gradients in the centre of said cross, namely:

$$T_{\Psi_{lcsm}} \mu(x_0, r_0) = \sqrt{(A_x - \rho_{x,0})^2 + (A_y - \rho_{y,0})^2} \qquad (21)$$

In fact, this last step means preserving the module of a wavelet projection with vectorial values, but in order to simplify the notation it is left as is.

9. Next the singularity exponent $h(x_0)$ is obtained by applying equation (7).

In other words, the singularity measurement associated to point $x$ comprises:

- withholding from the obtained $(2 \times d) + 1$ vectors of local difference in gradient the d components associated to point $x$, and
- obtaining the singularity measurement as the square root of the sum of the squares of these $d$ components

whereupon a local correlation singularity measurement is obtained suitable for measuring the unpredictability of a given point.

The global correlation singularity measurement improves that of local correlation by taking into account not only the size of deviations between the estimated and real signals, but also the difference between the directions of the obtained gradients. For this reason, the initial data is not only the signal $s(\vec{x})$, but also the gradient $\nabla s(\vec{x})$. It is very important to provide a stable characterisation of $\nabla s(\vec{x})$; to this effect, the two cores mentioned above have been used: a core of differences of one pixel forward and a core of half pixel increases.

The global correlation singularity measurement has a more complex structure; however, the inventor has 1

verified that it is the most effective for evaluating singularities and at the same time guaranteeing a high quality of reconstruction. Obtaining this measurement is carried out in two stages: in the first place, a gradient difference is obtained for all points; next, the measurement at each point $x_0$ is constructed by combining the differences in gradient associated to said point and the gradient $\nabla s$ in each group of neighbours of said point.

The purpose of this measurement is to evaluate $T_{\Psi germ}$ m $(x_0, r_0)$ at a given point $x_0$ and comprises the following steps:

First stage: obtaining the differences in gradient at each point $x_0$.

1. The neighbours of $x_0$ are converted into a 5- component vector $\bar{s} = (s_0, s_1, s_2, s_3, s_4)$ following the cross indexation scheme of the drawing shown above.

2. The vector is appropriately rectified: in the first instance obtaining $\bar{S} = \dfrac{1}{3}\sum_{i=1}^{5} s_i$, and the rectified vector, $\bar{p} = (p_0, p_1, p_2, p_3, p_4)$, is defined as:

$$p_0 = s_0 + \bar{S}$$

$$p_i = s_0 - \bar{S}, \quad i = 1,...,4 \tag{22}$$

3. The cross gradient operator is applied to $\bar{p}$ in order to obtain vectors $\bar{g}_x$ and $\bar{g}_y$.

4. The value of the components associated to index 0 of said vectors is preserved for subsequent use, $A_x = g_{x,0}, A_y = g_{y,0}$.

5. Said two components are adjusted to zero, $g_{x,0} = g_{y,0} = 0$.

6. The cross reconstruction operator is applied to the resulting vectors $\bar{g}_x$ and $\bar{g}_y$, in order to obtain the reconstructed signal $\bar{r}$.

7. The cross gradient operator is applied once more to $\bar{r}$ in order to obtain the estimated gradient vectors $\bar{\rho}_x$ and $\bar{\rho}_y$.

8. The difference in gradient associated to the central point is generated,

$$(\varepsilon_x, \varepsilon_y) = (\rho_x - A_x, \rho_y - A_y).$$

Second stage: the global correlation singularity measurement is evaluated by combining the differences in gradient and the gradients of the group of neighbours of each point in accordance with the following steps:

1. For each point xo, the window of 3 x 3 centred around it is taken into consideration. In this window, each point has coordinates $x_0 + (d_x, d_y)$, where $d_x$, $d_y$ can have the values -1, 0, 1.

2. The autoprojection of the differences in gradients in this window is calculated, S $(x_0)$:

$$S(x_0) = \varepsilon_x(x_0) \sum_{d_x,d_y=-1,0,1} \varepsilon_x(x_0 + (d_x,d_y)) + \varepsilon_y(x_0) \sum_{d_x,d_y=-1,0,1} \varepsilon_y(x_0 + (d_x,d_y)) \tag{23}$$

In other words, the singularity measurement associated to point $x$ comprises:

-taking the $d$-dimensional hypercube that surrounds a given point $x$, formed by the points obtained when -1, 0 or +1 is added to the coordinate indices, which provides $3^d$ points;

-withholding for each poin$t$ of said hypercube the $d$ dimensional vector, the local difference in gradient of that point, and

-adding these $3^d$ vectors of $d$ dimensions, and calculating the scalar product of the resulting vector with the d dimensional vector of difference in gradient associated to point $x$, which provides an alignment index of local differences in gradient.

The alignment index of differences in gradient allows us to deduce the existence of a spatial coherence between the errors committed by omitting the central point when the signal is reconstructed, which allows us to differentiate between noise (of random orientation) and coherent signal.

3. The energy of the gradient associated to this window is obtained, E ($x_0$) :

$$E(x_0) = \sum_{d_x, d_y = -1,0,1} \left( \partial_x s(x_0 + (d_x, d_y))^2 + \partial_y s(x_0 + (d_x, d_y))^2 \right) \qquad (24)$$

4. The energy of difference in gradient of point $x_0$ is obtained, e ($x_0$):

$$e(x_0) = \varepsilon_x(x_0)^2 + \varepsilon_y(x_0)^2 \qquad (25)$$

5. Finally, the global correlation singularity measurement is defined as:

$$T_{\Psi_{gcm}} \mu(x_0, r_0) = \sqrt{e(x_0) \frac{|S(x_0)|}{E(x_0)}} \qquad (26)$$

In this case, the definition is much more complex and the linearity has been totally lost, even if wavelet projections with vectorial values are considered.

One can see that the gradient energy of said hypercube has been obtained as the sum of the squared modules of the gradients of each point of the hypercube.

On a separate note, one can see that the global singularity measurement is the product of the local correlation singularity measurement obtained as explained above, from the squared root of the absolute value of the alignment index of local differences in gradient divided by the gradient energy of the hypercube.

6. Next the singularity exponent h ($x_0$) is obtained by applying equation ($\underline{7}$).

The invention described hereto can be implemented by means of computation techniques run on operating or calculation units. The implementation of the method comprises a system for the analysis of singularities in digital signals characterised in that it comprises in a basic version:

- means for obtaining for each point of the signal a local environment $C$ which comprises the first neighbours; and
- means for calculating for each point x of the signal a reconstructibility measurement, or singularity measurement, based on the corresponding environment associated to each point, constructed from inference of the value of each point based on the value of the points of said environment using the following function or reconstruction formula for the calculation

$$s(\mathbf{x}) = \left( g \cdot \nabla_C s \right)(\mathbf{x})$$

where
- $s$ is a given signal,
- $C$ is the local environment of $\mathbf{x}$,
- $\nabla_C s$ is the essential gradient of s over that environment,
- $g$ is the universal reconstruction kernel explained above, and
- symbol • means the convolution scalar product,

said singularity measurement containing the difference between the measured value and the inferred value for each point.

According to an improved embodiment, the system will additionally comprise means for carrying out at least one logarithmic transformation on said reconstructibility measurement designed to suppress the dependency on the number of points of the signal and providing a singularity exponent for each point of the signal and in general:

> means for obtaining a stable derivative function of a digital signal, sampled at regular intervals;
> means for obtaining for each point of said sampled digital signal a singularity measurement of the function at that point, weighting the contributions of a local environment of the point and the value of the derivative at all points of said local environment; and
> means for carrying out at least one logarithmic transformation of said singularity measurement with a view to obtaining an independent measurement of the amplitude of the sampled digital signal and that varies in a controlled manner underchanges in resolution.

Said means will comprise in general calculation or data processing units integrated in the system or materialised in the form of an integrated circuit or dedicated processing unit. The instructions for executing the stages of the method will be recorded in programs that can be loaded on the operating units or integrated in electronic circuits.

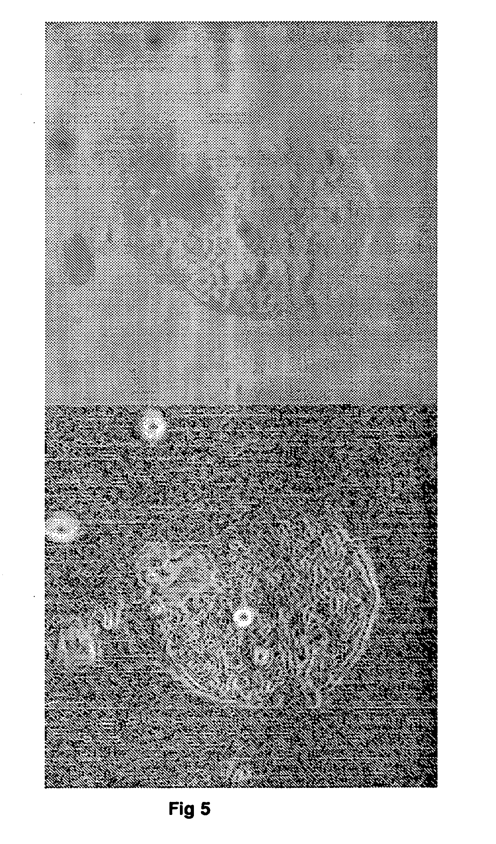

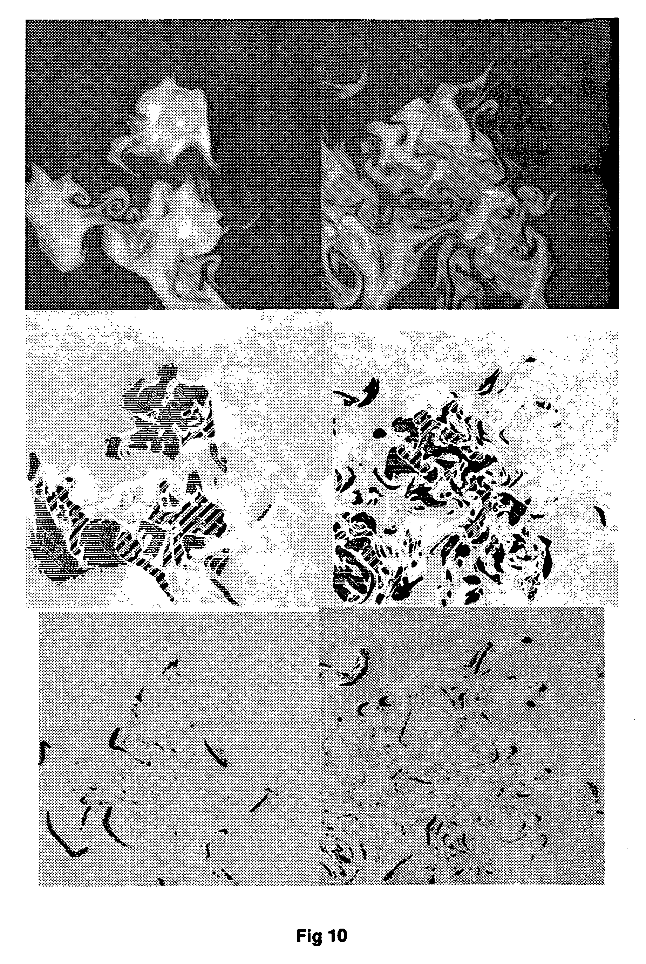

Below several examples are described, to be considered non-limitative of the application of the method in accordance with the invention in different fields. All of the digital signals processed in the following examples have been obtained from public databases, except those corresponding to figures 5 and 10. All signals have been processed using a programme written by the inventor in C language and run on a personal computer with a Linux operating system. The singularity exponents obtained have been converted into digital images by the same program.

**Example 1: Detection of structures and recognition of patterns**

Singularity exponents make it possible to recognise very subtle structures which are difficult to detect at first sight. This is so because the exponents measure the degree of transition of the signal (in other words, their blur) at each point irrespective of their real amplitude. This can be used to detect small modifications in a medium and to prove the existence of new structures in images. The range of applications covers all manner of images, from medical imagery through to remote detection, as well as the detection of manipulated photographs.

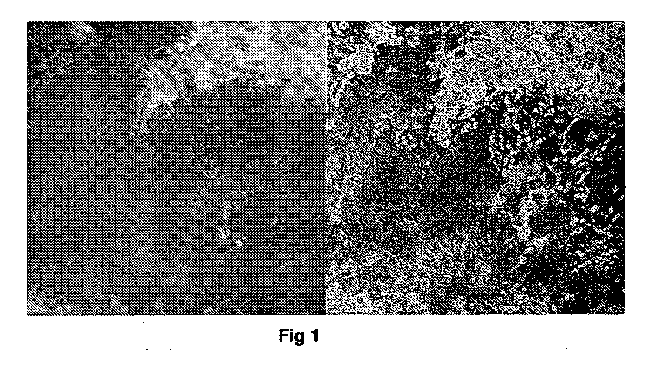

Figure 1 of the drawings indicates the detection of internal oceanic waves from a MeteoSat satellite image (see reference [14]). The image on the left shows a portion of the visible channel of the MeteoSat V satellite acquired on 27 December 2004 over the submarine Mascarene Ridge (Northeast area of Madagascar); the image has a resolution of 2.5 kilometres x 2.5 kilometres approximately, and comprises $500 \times 500$ pixels (which corresponds to an area of 1250 km x 1250 km). The clouds appear as blurry, white areas, while the sea is the dark background. The image on the right shows the associated singularity exponents, represented with a palette that assigns the brightest colours to the lowest values. It took approximately 10 seconds to obtain said singularity exponents on a laptop computer with two Centrino processors at 1.8 Mhz (the times of the other examples refer to the same computer). In addition to a richer structure associated to the clouds and atmospheric flows, the existence of concentric oceanic fronts of up to 500 km long was revealed, probably internal waves, in the centre of the image. We now know that having good knowledge of internal oceanic waves is key to understanding processes of dissipation of energy and mixture (of nutrients, spread of contaminants, etc) in oceans; despite this, there is very little, and not very systematic information regarding the areas of the planet affected by these waves. For example, those mentioned in the image on the right, despite their enormous extension (various fronts of up to 500 km long separated by up to 300 km) had not been published to date.

In Figure 2 the top part shows an image of algae proliferation in lake Mendota (Switzerland) in false colour, as a combination of various channels in order to increase the contrast of said algae proliferation. The bottom part of the figure shows the singularity exponents, which were obtained following barely 3 seconds of calculation, represented using a palette of shades of grey in which the lower values are brightest.

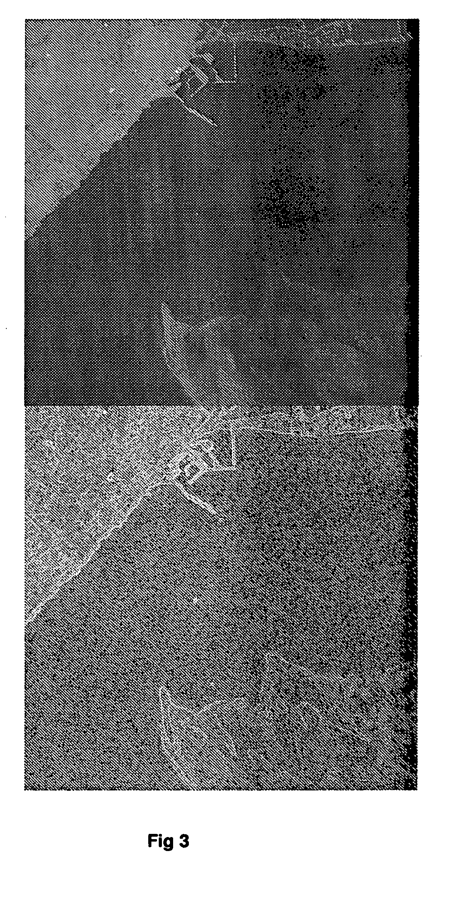

In Figure 3 the top part shows a view of Alfacs Bay (NE Spain, River Ebro Delta) registered by band 8 of LandSat, on an unspecified date. The resolution of this image is 2.5 metres, and the represented zone covers $500 \times 500$ pixels. The bottom part of the figure shows the singularity exponents (calculation time: 10 seconds). Several boats that are barely visible in the top image appear with well-defined contours in the bottom image; various wave fronts can also be observed.

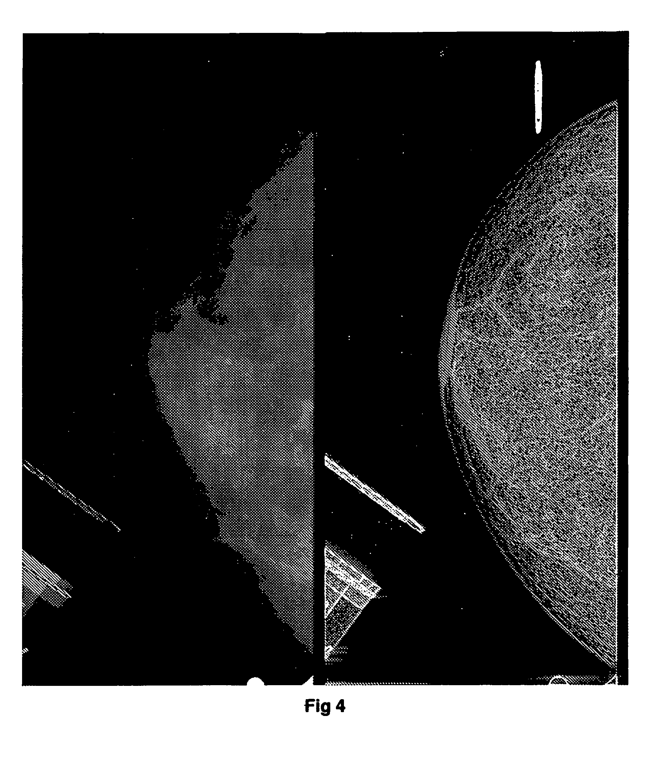

Figure 4 on the left shows a mammography in digital format with a resolution of $1976 \times 4312$ pixels, extracted from a public archive of digital format breast scans (USF Digital Mammography Home Page, http://marathon.csee.usf.edu/Mammography/Database.html) accessed on 10 October 2008. The right hand side of the same figure shows the associated singularity exponents (calculation time: approximately 4 minutes). The analysis reveals the structures of the various tissues forming the breast. This analysis could allow an earlier detection of damage. At the same time, the capacity to detect singularity lines irrespective of the contrast makes it possible to reduce the exposure to X-rays required for the detection of patterns.

In Figure 5, the top part shows an image of $200 \times 200$ pixels of the nucleus of an onion cell in interphase, obtained through optical microscopy (image courtesy of Elisenda Gendra and Mónica Pons, Molecular Biology Institute of Barcelona, Higher Council of Scientific Research). This image was acquired from a Leica SP1 confocal microscope, in transmission mode (Nomarski), with argon laser lighting at a 488nm wavelength. The bottom part of the same figure shows the associated singularity exponents (calculation time: approximately two seconds). The analysis of singularities reveals the existence of coherent lines inside the nucleus and on its periphery, possibly associated to structures related to elements of the nucleus such as chromatin and the nuclear membrane, such structures being difficult or impossible to resolve or reveal using optical media, in particular in the absence of any form of staining or marking. The singularity exponents appear to reveal for example the double membrane structure of the nucleus peripherally, and also structures associated to the chromatin fibres that fill the nucleus.

**Example 2: Image compression and denoising**

Due to the reconstruction formula, it is possible to regenerate an image based on the set of most singular points with enormous quality. Said set tends to be fairly disperse, constituting 20-30% of the total points. In order to complete the description, the gradient over said points must be recorded and stored, and coded in a compact manner. It has been observed that the gradients change smoothly over the lines of most singular manifold MSM and it is considered viable to be able to encode them in a compact manner. Therefore, reconstruction of images based on the most singular manifold MSM has been proven to have the potential to provide compression codes for high quality images.

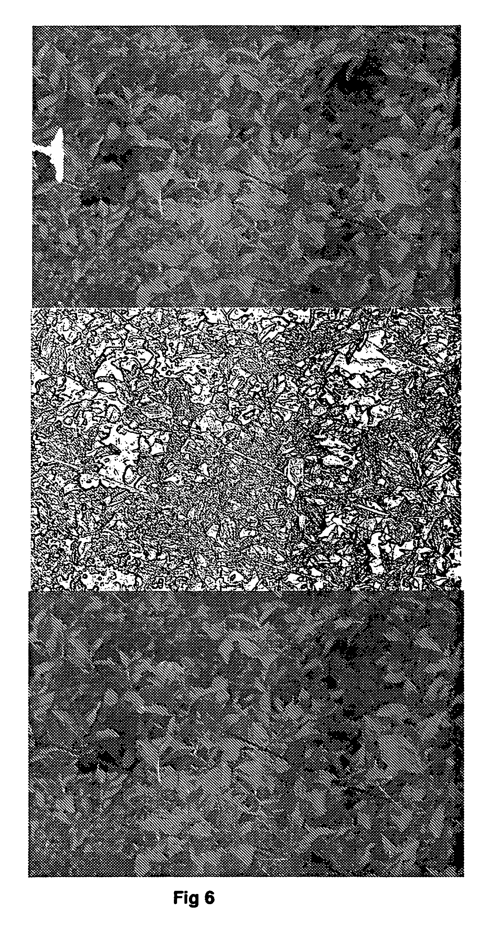

In figure 6, the top part shows an image of van Hateren identified in reference [18] as imk01020.imc. This image has been obtained using a CCD camera with a focal distance of 28 mm and is defined by a matrix of 1536 $\times$ 1024 pixels; the data is encoded as shades of grey in 12 nominal bits. It took about 50 seconds to obtain the singularity exponents. The middle part of the figure shows 30% of the most singular points. In the bottom part, the image has been reconstructed on the basis of the gradients over the MSM shown in the middle part, obtaining a quality measured using the Peak Signat-to-Noise Ratio (PSNR) of 37 dB, which indicates high quality.

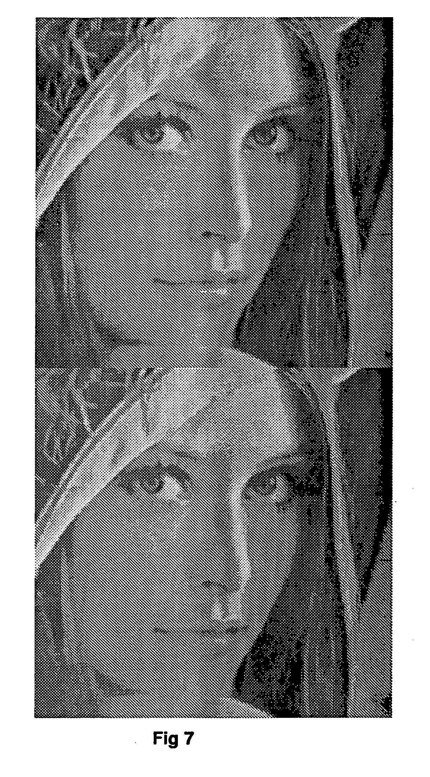

Figure 7 shows how reconstruction through MSM makes it possible to reduce the noise present in the signal. The top part of the drawing shows the original image (image of Lena, IEEE standard in image processing) with a resolution of 200 $\times$ 200 pixels; the bottom part, the reconstruction based on the associated MSM. The contours and borders contained in the MSM ere preserved in the reconstruction, but the transitions associated to noise, which do not form coherent fronts, are mostly eliminated, which is particularly noticeable in some areas of the face, in the reconstructed image.

**Example 3: Determination of flow lines in geophysical and other types of images**

Given the theoretical roots on which the definition of singularity exponents is founded, the latter are very useful when used to analyse images of scalar variables in turbulent flows. The theory predicts that singularities are advected (in other words, carried by the fluid), which can be used in order to trace current lines. In essence, the path of currents can be followed simply by analysing the images associated to temperature, chlorophyll concentration and other similar indicators. The results of the singularities derived from sea surface temperature detected by microwave sensors (MW SST) on board satellites Modis Acqua and TRMM are compared with altimeter maps.

Altimeter data is very difficult to produce and has a very poor spatial resolution, requiring filtration using a low step filter. Additionally, to produce quality altimeter maps, various active altimeters need to be combined, but since 2003 only two satellites remain in operation, and soon only one of them will be active, or even none. However, MW SST is much cheaper, can be synoptically obtained over large zones and is easy to process. As shown in the comparison, the singularities outline circulation patterns fairly well, demonstrating that they are channelled by the flow. Therefore, determining currents using singularities analysis emerges strongly as an interesting alternative for operational oceanographic systems for the management of environmental risk.

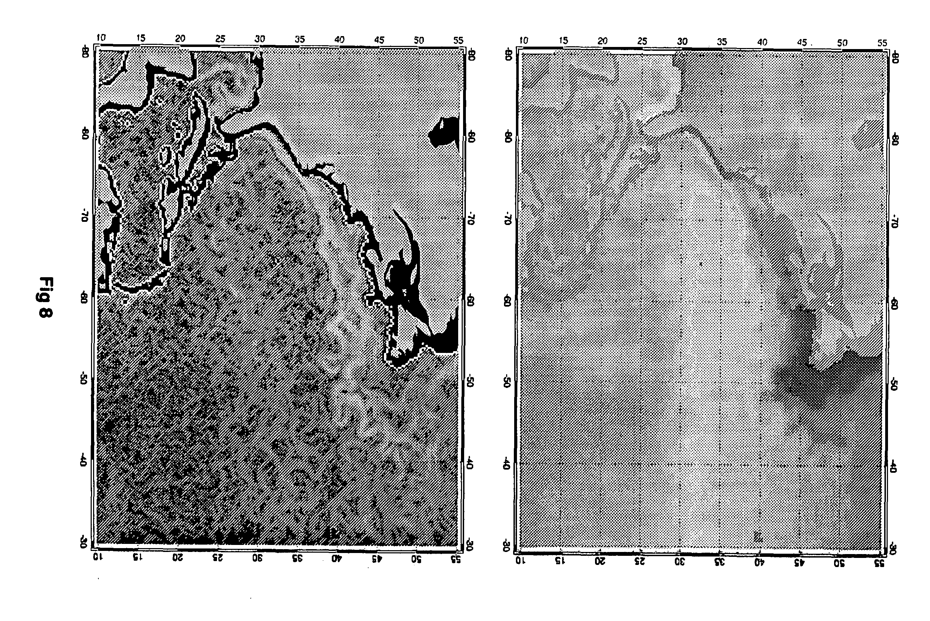

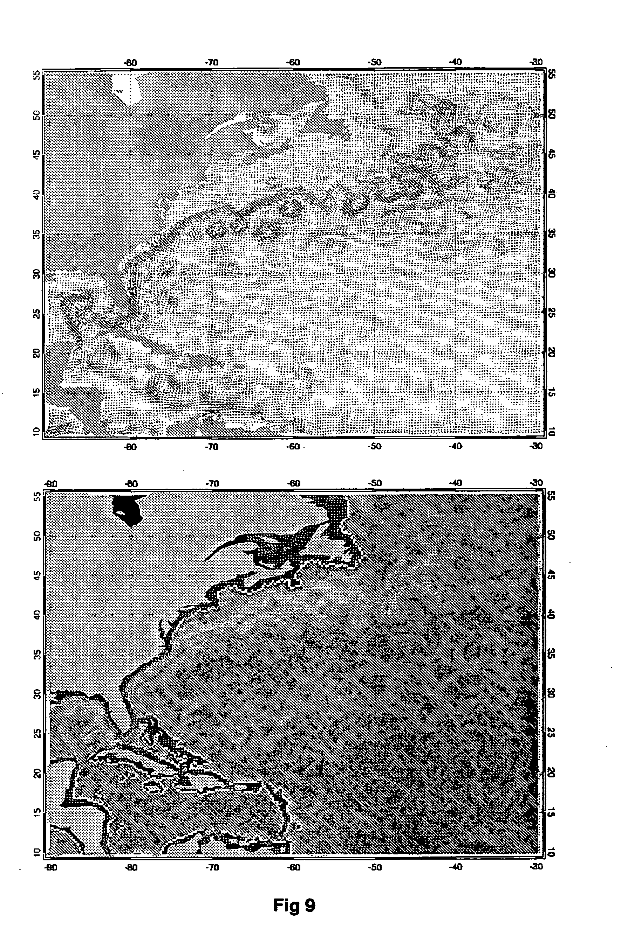

Figura 8 shows on the bottom part the singularity exponents derived from an image of sea surface temperature obtained from microwaves (MW SST) - AMSR-E-TMI shown in the upper part, corresponding to 1 February 2003 (image downloaded from Remote Sensing Systems, http://www.ssmi.com/; calculation time for the analysts of singularities: about 5 seconds). The zone shown corresponds to the current in the Gulf of Mexico. The temperature map is given on a cylindrical projection grid with a constant angular resolution of ¼ degree. The top of Figure 9 shows the field of geostrophic currents obtained by interpolation of four altimeter satellites, for the same date of 1 February 2003; the bottom part of the figure shows the overlap of the two fields (the singularity exponents of temperature of the previous figure and the geostrophic speed field of the upper panel of this figure).

**Example 4: Dynamic analysis of variable sequences in turbulent flows.**

Nowadays, the numerical simulation of fluids is an essential tool in tasks such as weather and oceanographic forecasting, the aerodynamic prototyping of models or various problems of analysis of chemical and combustion reactions, of industrial interest. However, given the chaotic nature of fluids in a turbulent regime it is not possible to make an accurate description limited by a finite number of degrees of freedom such as those imposed by the discretised grids used in numerical simulation. This problem is a consequence of the fact that when a fluid is described using a specific size of grid step the movements which take place on smaller scales cannot be resolved, which given the chaotic nature of the fluid cannot be predicted.

The usual strategy for dealing with these unresolved scales is to introduce empirical viscosity coefficients (for the speed field) and empirical diffusivity (for each variable considered in the simulation), also known as eddy viscosity and eddy diffusivity. These coefficients represent the more or less random and homogeneous dispersion of the variable considered in these unresolved scales. Said coefficients serve to model the effect of unresolved scales on resolved scales through simulation under certain circumstances; for example, if turbulence is fully developed or if the integration time of the simulation is sufficiently large compared to the typical dispersion time of unresolved scales.

Determination of the eddy viscosity and eddy diffusivity coefficients in fluids is fundamental for describing the evolution of turbulent fluids using numerical models with sufficient quality. A good determination of these coefficients is crucial in order to obtain greater acuracy for the abovementioned variables with the numerical simulation, as well as to extend the time horizon of the validity of these forecasts. However, in most numerical models used nowadays, these coefficients are taken as a constant throughout the fluid's domain. This constant is estimated in a heuristic manner for each numerical execution, although its value is usually compared with an evaluated experimental value of the dynamic sequence analysis, according to the following formula:

$$\kappa_0 = -\frac{\frac{1}{2}\langle \partial_t \theta_0^2 \rangle}{\langle |\nabla \theta_0|^2 \rangle}$$

where $\kappa_0$ is the global empirical diffusivity coefficient, $\theta_0$ is the analysed variable, subscript 0 refers to the scale at which processing is taking place and the triangular parentheses mean average throughout the spatial domain of the fluid. If instead of $\theta_0$ on takes the current function, what is evaluated is viscosity, instead of diffusivity.

In reality, it is possible to pass from a global estimation of diffusivity as discussed above to a local estimation of this coefficient for each point of the domain. To do this, the averages of time derivatives and gradients of the expression above are replaced with weighted averages with a decreasing weight with the distance from the point of evaluation. However, if the global evaluation formula presented above is already somewhat unstable, the local formula is extremely unstable, giving rise to negative local diffusivity values at certain points, which is physically unacceptable. Application of the method of this invention makes it possible to obtain a more stable variable (the density of the MSM), on the basis of which very stable evaluations of global diffusivity are obtained and evaluations of local diffusivity that are not negative at any point.

As an example, local diffusivities have been evaluated using images of a colouring agent dispersed in a laboratory experiment. The top row of figure 10 shows a colouring agent dispersed in a 2D turbulent medium in a laboratory at two moments in time, t=0s for the column on the left and t=10s for the column on the right. (Images of the top row, courtesy of Patrick Tabeling, École Normale Supérieure, Paris). In the middle row of the same figure, the evaluation of local eddy diffusivity is shown for all points at the same moments as the images of the top row, using as variable $\theta_0$ the concentration of colouring agent, which is estimated on the basis of the shade of grey of the figures of said top row. The values of local diffusivity thereby obtained have been represented using a palette of two extreme colours (red for negatives, blue for negatives), with an intermediate colour (white) for values close to zero. In order to facilitate comprehension of the figure a shaded area of thick slanted lines has been overlaid on the zones with the largest size negative values, and a shaded area in a thinner horizontal line on the zones with highest positive values. As these middle row images show, the estimation of diffusivity based on concentration gives rise to extensive areas with negative values; plus, when this sequence is processed one can see that the determination is very unstable, since the estimated values of local diffusivity in certain areas change suddenly at specific moments in time. Finally, the bottom row presents the local diffusivity evaluations for the same two moments in time obtained based on the density function of the MSM, which is calculated on the basis of the singularity exponents evaluated using this invention. As the figure shows, these evaluations of local diffusivity do not present regions with negative values; also, observation of the entire sequence shows a gentle and continuous evolution of the local diffusivity values across all points.

Next, a series of references to scientific publications on the state of the art are included, which reflect aspects explained in this invention.

**References**

[1] A. Arneodo. Wavelet analysis of fractals: from the mathematical concepts to experimental reality. In G. Erlebacher, M. Yousuff Hussaini, and L.M. Jameson, editors, Wavelets. Theory and applications, page 349. Oxford University Press. ICASE/LaRC Series in Computational Science and Engineering, Oxford, 1996.

[2] A. Arneodo, F. Argoul, E. Bacry, J. Elezgaray, and J. F. Muzy. Ondelettes, multifractales et turbulence. Diderot Editeur, Paris, France, 1995.

[3] U. Frisch. Turbulence. Cambridge Univ. Press, Cambridge MA, 1995.

[4] S. Mallat. A theory for multiresolution signal decomposition: the wavelet representation. IEEE Transaction on Pattern Analysis and Machine Intelligence, 11:67-93, 1989.

[5] S. Mallat and W. L. Huang. Singularity detection and processing with wavelets. IEEE Trans. in Inf. Th., 38: 617-643, 1992.

[6] S. Mallat and S. Zhong. Wavelet transform maxima and multiscale edges. In Ruskai M. B. et al, editor, Wavelets and their applications. Jones and 8artlett, Boston, 1991.

[7] D. Marr. Vision. Freeman and Co. Nueva York, 1982.

[8] G. Parisi and U. Frisch. On the singularity structure of fully developed turbulence. In M. Ghil, R. Benzi, and G. Parisi, editors, Turbulence and Predictability in Geophysical fluid Dynamics. Pro. Intl. School of Physics E. Fermi, pages 84-87, Amsterdam, 1985. North Holland.

[9] O. Pont, A. Turiel, and C. Perez- Vicente. Application of the microcanonical multifractal fonnalism to monofractal systems. Physical Review E, 74:061110,2006.

[10] Z. R. Struzik. Determining local singularity strengths and their spectra with the wavelet transfonn. Fractals, 8 (2):163-179, June 2000.

[11] A. Turiel. Relevance of multifractal textures in static images. Electronic Letters on Computer Vision and Image Analysis, 1(1):35-49,2003.

[12] A. Turiel and A. del Pozo. Reconstructing images from their most singular fractal manifold. IEEE Trans. Im. Proc., 11:345-350,2002.

[13] A. Turiel, J. Isern-Fontanet, E. Garcia-Ladona, and J. Young. Detection of wave fronts in the Indian Ocean from geostationary sunglint satellite imagery. Próxima aparición en el International Journal of Remote Sensing, 2007.

[14] A. Turiel and N. Parga. The multi-fractal structure of contrast changes in natural images: from sharp edges to textures. Neural Computation, 12:763-793,2000.

[15] A. Turiel and C. Perez- Vicente. Multifractal geometry in stock market time series. Physica A, 322:629-649, May 2003.

[16] A. Turiel and C. Perez- Vicente. Role of multifractal sources in the analysis of stock market time series. Physica A, 355:475-496, September 2005.

[17] A. Turiel, C. Perez- Vicente, and J. Grazzini. Numerical methods for the estimation of multifractal singularity spectra on sampled data: a comparative study. Journal of Computational Physics, 216(1 ):362-390, July 2006.

[18] J. H. van Hateren and A. van der Schaaf. Independent component filters of natural images compared with simple cells in primary visual cortex. Proc. R. Soc. Lond., B265:359-386, 1998.

**Claims**

1. Method for the analysis of singularities in digital signals of physical phenomena, **characterised in that** it comprises the following stages:

   a) determining for each point $x$ of the signal a local environment $C$ comprising the first neighbours of said point $x$; and

   b) calculating for each point $x$ of the signal a singularity measurement providing a measure of signal reconstructibility based on the associated local environment, constructed from inference of the value of the signal at said point on the basis of the value of the points of said local environment using the following reconstruction formula

$$s(\mathbf{x}) = \left(g \cdot \nabla_{c} \dot{s}\right)(\mathbf{x})$$

where:

- $s$ is a given signal,

- $\nabla_{c} s$ is the essential gradient of $s$ over said local environment, i.e, the gradient restricted to the local environment, whose components are $\partial_{x,C}s(x) = \partial_x s(x)$ for $x \in C$, $\partial_{x,C}s(x) = 0$ for $x \notin C$, $\partial_{y,c}s(x) = \partial_y s(x)$ for $x \in C$, $\partial_{y,c}s(x) = 0$ for $x \notin C.\partial$

- $g$ is the universal reconstruction kernel, i.e. the vectorial kernel of universal reconstruction, which in the Fourier space is given by the expression:

$$\hat{\bar{g}}(\mathbf{k}) = i\frac{\mathbf{k}}{k^2}$$

and

- symbol $\cdot$ means convolution scalar product, i.e.

$$\left(\bar{g} \cdot \nabla_{c} s\right)(\mathbf{x}) = \left(g_x \star \partial_{x,c} s\right)(\mathbf{x}) + \left(g_y \star \partial_{y,c} s\right)(\mathbf{x}),$$ where $*$ means the ordinary convolution product of functions,

wherein said singularity measurement is based on the difference between the measured signal value at said point **x** and the signal value inferred for said point **x** from said reconstruction formula, the implementation of said reconstruction formula being adapted to said local environment by restricting it to said local environment.

**2.** Method according to claim 1, **characterised in that** it also includes a third stage c) which comprises carrying out at least one logarithmic transformation on said singularity measurement, which suppresses the dependency of the measurement on the number of points of the signal, obtaining a singularity exponent for each point of the signal.

**3.** Method according to claim 2, **characterised in that** it comprises, before carrying out stage a), obtaining a stable derivative function of said digital signal that is sampled at regular intervals, and **in that** in stage b) it comprises obtaining for each point of said sampled digital signal a singularity measurement of the function at that point, weighting the contributions of a local environment of the point and the value of the derivative at all points of said local environment.

**4.** Method according to claim 3, **characterised in that** the stable derivative of the digital signal which precedes stage a) is obtained by derivative of one point increases to the right or centred half point increases, the derivative being defined in both cases in the Fourier space by multiplication of the signal by the corresponding derivative cores, where assuming that there are $N_x$ points in a coordinate direction x to be derived, the derivative cores are expressed as follows:

Difference of one point to the right:

$$\left(\widehat{\partial}_x\right)_n = \left(e^{2\pi i \frac{n}{N_x}} - 1\right)$$

Difference of half point centred:

$$\left(\widehat{\partial}_x\right)_n = \begin{cases} i\sin\left(\pi \frac{n}{N_x}\right) & ; \quad n < N_x/2 \\ -i\sin\left(\pi \frac{N_x - n}{N_x}\right) & ; \quad n \geq N_x/2 \end{cases}$$

comprising the following stages:

- application of the Fourier transform to said signal;
- multiplication of a copy of the Fourier transform of the signal by the core associated to each one of the $d$ components; and
- application of the anti-transform to these $d$ components.

5. Method according to claim 2, **characterised in that** the logarithmic transformation of stage c) which is at least one, is carried out as follows:

- for each point of the sampled digital signal the measurement obtained in stage b) is taken and divided by the mean of the measurements of all points; and
- the logarithm of the result is divided by the logarithm of the minimum scale of the sampled digital signal, which is defined as the $d$-nth root of the total number of points of the signal, where $d$ is the dimension or number of variables inherent to the signal.

6. Method according to claim 5, **characterised in that** the singularity measurement defined in stage b) is calculated by means of the following steps:

- calculating the environment vector of the $(2 \times d)$ first neighbours of a base point $x$, obtaining the first neighbours of point $x$ by adding consecutively to each one and only one of the coordinate indices of said point $x$, first -1 and then +1, forming the environment vector of $(2 \times d)+1$ components, whose first component is the value of the signal at point $x$, the second the value of the signal at the point obtained by adding -1 to the first coordinate of $x$, the third the value of the signal at the point obtained by adding +1 to the first coordinate of $x$, the fourth the value of the signal at the point obtained by adding -1 to the second coordinate of $x$, and so on successively;
- extracting the tendency of this vector, which is defined as the sum of its components divided by $((2 \times d)-1)$ and applying this tendency to the environment vector, adding it to the component referring to base point $x$ and subtracting it from the other components, in such a way that this new obtained environment vector has a zero mean;
- applying a local gradient operator to said zero mean vector, which returns $(2 \times d)+1$ gradient vectors each one of them of $d$ components, which define the local gradient:
- cancelling out the components of said local gradient associated to point $x$;
- applying to said local gradient, with the cancelled out components, a local reconstruction operator unequivocally associated to said local gradient operator obtaining a vector of $(2 \times d)+1$ components, which is referred to as an estimated signal;
- applying once again the local gradient operator to said vector of $(2 \times d)+1$ components or estimated signal and obtaining $(2 \times d)+1$ vectors, one for each point of the local environment, of $d$ components each one, which define the estimated local gradient for that environment;

- obtaining (2 x $d$)+1 vectors of $d$ components which express the difference in gradients between said local gradient and -said local estimated local gradient, and
- obtaining using these (2 x $d$) +1 vectors of difference in gradients the singularity measurement associated to point *x*.

7. Method according to claim 6 **characterised in that** said local gradient operator applied to the vector of (2 × $d$)+1 components comprises, for each environment of a point *x* defined by the vector of (2 × $d$)+1 components which includes the value of the signal at point *x* and at its (2 × $d$) neighbours, executing a local Fourier transform, which only takes this environment into account.

8. Method according to claim 7, **characterised in that** said local Fourier transform is constructed as a matrix of ((2 × $d$)+1)) × -((2 × $d$)+1)), whose elements all have a value of 1 except those of the main diagonal and of the adjacent diagonals, where all the elements of the main diagonal excluding the first on the left, which is worth 1, are worth the complex exponential 2 × π x i/3 where i is the square root of -1 and the elements of the adjacent diagonals are worth consecutively 1, exponential of -2 × π × i/3, 1, and so on successively, starting from top left towards bottom right.

9. Method according to claim 8, **characterised in that** the local Fourier transform is calculated by matricially applying the described matrix of ((2 × $d$)+1)) x ((2 × $d$)+1)) to an environment vector of (2 × $d$)+1 components.

10. Method according to claim 9, **characterised in that** the local Fourier anti-transform is calculated by applying the inverse matrix of the one described in claim 8, which always exists.

11. Method according to claim 10 **characterised in that** for each environment of a point $\overline{x}$ defined by a vector $\vec{p}$ of (2 × $d$)+1 components, application to $\vec{p}$ of said local gradient operator gives a result expressed by the local gradient vector for point *x* and the points of its environment and comprises the following stages:

- applying the local Fourier transform to $\vec{p}$ ;

- constructing the derivative throughout a given coordinate direction by multiplying by $i\sqrt{3}$ the component of the Fourier transform vector of $\vec{p}$ associated to the point that is obtained when the coordinates of point *x* are modified by adding -1 to the index of said coordinate direction and by multiplying by $-i\sqrt{3}$ the component of said same vector obtained by modifying the coordinates of point *x* through adding +1 to said coordinate index, and cancelling out the remaining components, thereby obtaining $d$ derivative vectors, one for each coordinate;
- applying the local Fourier anti-transform to these $d$ vectors of (2 × $d$)+1 components, each vector thereby representing the derivative throughout each one of the dcoordinate directions at all points of the local environment; and
- reordering the components of these $d$ vectors, by grouping together for each one of the points of the local environment the $d$ derivatives associated to that point, obtaining (2 × $d$)+1 local gradient vectors, of $d$ components each one, which reproduce the gradient at each point of the local environment.

12. Method according to claim 6 **characterised in that** said reconstruction operator applied to the local gradient is defined as the inverse of the local gradient operator, and comprises the following stages:

- applying the local Fourier transform to the $d$ derivative vectors throughout each coordinate direction, each one of (2 × $d$)+1 components;

- constructing the reconstruction vector throughout a given coordinate direction by dividing by $i\sqrt{3}$ the component of the local Fourier transform vector of $\vec{p}$ associated to the point that is obtained when the coordinates of point *x* are modified through adding -1 to the index of said coordinate direction and dividing by $-i\sqrt{3}$ the component of said same vector obtained when the coordinates of point *x* are modified through adding +1 to said coordinate index, and cancelling out the remaining components, thereby obtaining $d$ reconstruction vectors throughout a direction, one for each coordinate;
- adding these $d$ reconstruction vectors; and
- applying the local Fourier anti-transform to the vector of (2 × $d$)+1 components resulting from the previous step.

13. Method according to claim 6, **characterised in that** the final step of stage b) whereby the singularity measurement associated to point *x* is obtained comprises:

- withholding from the obtained $(2 \times d) + 1$ vectors of difference in gradient the $d$ components associated to point $x$, and
- obtaining the singularity measurement as the square root of the sum of the squares of these $d$ components

whereby a local correlation singularity measurement is obtained suitable for measuring the unpredictability of a given point.

14. Method according to claim 6, **characterised in that** final step of stage b) whereby the singularity measurement associated to point $x$ is obtained comprises:

- taking a $d$-dimensional hypercube that surrounds a given point $x$, made up of the points obtained by adding -1, 0 or +1 to each coordinate index of $x$ which provides $3^d$ points;
- withholding for each point of said hypercube the $d$-dimensional vector associated to the central component (associated to the base point) of difference in gradient, and
- adding these $3^d$ vectors, and calculating the scalar product of the resulting vector with the $d$-dimensional vector of difference in gradient associated to point $x$,

whereby an alignment index of differences in gradient is obtained which allows deduction of the existence of a spatial coherence between the errors committed by omitting the central point when the signal is reconstructed, allowing distinction between noise of random orientation and coherent signal.

15. Method according to claim 14, **characterised in that** it comprises additionally:

- before carrying out stage a), obtaining a stable derivative function of said digital signal that is sampled at regular intervals, and obtaining in stage b) for each point of said sampled digital signal a singularity measurement of the function at that point, weighting as follows the contributions of a local environment of the point and the value of the derivative at all points of said local environment;
- obtaining the gradient energy of the abovementioned hypercube by adding the squared modules of the gradients of each point of the hypercube;
- obtaining a local correlation singularity measurement at point x by means of the following operations:

  - withholding from the obtained $(2 \times d) + 1$ vectors of difference in gradients the $d$ components associated to point $x$, and
  - obtaining the singularity measurement as the square root of the sum of the squares of these $d$ components; and

- obtaining the global correlation singularity measurement as the product of the local correlation singularity measurement through the square root of the absolute value of the alignment index of local differences in gradient, the latter divided by the gradient energy of the hypercube.

16. Method according to claim 15, **characterised in that** the stable derivative of the digital signal that precedes stage a) is obtained by derivative of one point increases to the right or centred half-point increases, in both cases the derivative being defined in the Fourier space by multiplication of the signal by the corresponding derivative cores, where assuming that there are $N_x$ points in a coordinate direction $x$ where said derivative cores are to be derived, the derivative cores are expressed as follows:

Difference of one point to the right:

$$\left(\hat{\partial}_x\right)_n = \left( e^{2\pi i \frac{n}{N_x}} - 1 \right)$$

Difference of half-point centred:

$$
\left(\hat{\partial}_x\right)_n = \begin{cases} i\sin\left(\pi\dfrac{n}{N_x}\right) & ; \quad n < N_x/2 \\[3mm] -i\sin\left(\pi\dfrac{N_x - n}{N_x}\right) & ; \quad n \geq N_x/2 \end{cases}
$$

comprising the following stages:

- application of the Fourier transform to said signal;
- multiplication of a copy of the Fourier transform of the signal by the core associated to each one of the $d$ components; and
- application of the anti-transform to these $d$ components

17. Method according to claim 6, **characterised in that** said sampled digital signal is one of:

time series, transects of physical variables selected from a group comprising temperature, concentration of chemical species, electrical intensities, strength, pressure, and density, in the case of $d=1$;
images of real environments such as photographic images, biomedical images such as ultrasound scans, X-rays and radiodiagnosis and nuclear medicine images in general, such as gamma graphs, CAT, PET, MRI, and images obtained by means of any other technique, microscopic images of optical, electronic and of any other type, geophysical images, images obtained from satellites or craft conveyed by air, land, submerged or of any other type, distributed variables captured in two dimensions by sensors in land, sea, air, satellite and other media in the case of $d=2$;
image time sequences and two-dimensional variables of the preceding cases in three-dimensional volumes in the case of $d=3$;
time sequences of variables in volume in the case of $d=4$.

18. Method according to claim 6, **characterised in that** the sampled digital signal in question is representative of a variable in a turbulent fluid, and **in that** it comprises obtaining the singularity exponents for the stabilisation of said variable in order to carry out a dynamic analysis of the fluid, obtaining new magnitudes such as the eddy diffusivity of the variable, the eddy viscosity of the fluid and other representative magnitudes of the fluid's unresolved scales.

19. System for the analysis of singularities in digital signals of physical phenomena, **characterised in that** it comprises:

- means for obtaining for each point x of the signal a local environment that comprises the first neighbours of said point $\boldsymbol{x}$; and
- means for calculating for each point $\boldsymbol{x}$ of the signal a singularity measurement providing a measure of signal reconstructibility based on the associated local environment, constructed from inference of the value of the signal at said point on the basis of the value of the points of said local environment using the following reconstruction formula

$$
s(\mathbf{x}) = \left(g \cdot \nabla_{\mathcal{C}} s\right)(\mathbf{x})
$$

where:
- s is a given signal,
- $C$ is the local environment of $\boldsymbol{x}$,

- $\nabla_{\mathcal{C}} s$ is the essential gradient of s over that environment, i.e, the gradient restricted to the local environment, whose components are $\partial_{x,C}s(x) = \partial_x s(x)$ for $x \in C$, $\partial_{x,C}s(x) = 0$ for $x \notin C$, $\partial_{y,C}s(x) = \partial_y s(x)$ for $x \in C$, $\partial_{y,C}s(x) = 0$ for $x \notin C$.
- $g$ is the universal reconstruction kernel, i.e. the vectorial kernel of universal reconstruction, which in the Fourier space is given by the expression:

$$\hat{\vec{g}}(\mathbf{k}) = i\frac{\mathbf{k}}{k^2}$$

and
- symbol · means convolution scalar product, i.e. $(\vec{g}\cdot\nabla_C s)(x) = (g_x * \partial_{x,C}s) + (g_y * \partial_{y,C}s)(x)$, where * means the ordinary convolution product of functions,

wherein said singularity measurement is based on the difference between the measured signal value at said point *x* and the signal value inferred for said point *x* from said reconstruction formula, the implementation of said reconstruction formula being adapted to said local environment by restricting it to said local environment..

20. System according to claim 19 **characterised in that** it includes also means for carrying out at least one logarithmic transformation on said reconstructibility measurement that suppresses the dependency on the number of points of the signal, which provides a singularity exponent for each point of the signal.

21. System according to claim 20, **characterised in that** it comprises additionally:

means for obtaining a stable derivative function of the digital signal, sampled at regular intervals; and
means for obtaining for each point of said sampled digital signal a singularity measurement of the signal at that point, weighting the contributions of said local environment of the point and the value of said stable derivative at all points of said local environment.

### Patentansprüche

1. Methode zur Analyse von Singularitäten in digitalen Signalen physikalischer Phänomene, **dadurch gekennzeichnet, dass** diese die folgenden Schritte umfasst:

a) Die Bestimmung einer lokalen Umgebung C für jeden Punkt x des Signals, welche die ersten Nachbarn des besagten Punkts x umfasst; und
b) Die Berechnung einer Singularitätsmessung für jeden Punkt x des Signals, wobei ein Maß der Signal-Rekonstruierbarkeit beruhend auf der verknüpften lokalen Umgebung bereitgestellt wird, das anhand der Interferenz des Signalwerts an dem besagten Punkt basierend auf dem Wert der Punkte der besagten lokalen Umgebung konstruiert wird, wobei die folgende Rekonstruierungsformel verwendet wird

$$s(x) = (g \cdot \nabla_C s)(x)$$

Wobei:

- s ein gegebenes Signal ist,
- $\nabla_C s$ der wesentliche Gradient von s über der besagten lokalen Umgebung ist, d. h. der auf die lokale Umgebung begrenzte Gradient, dessen Komponenten

$$\partial_{x,C}s(x) = \partial_x s(x) \text{ für } x \in C, \ \partial_{x,C}s(x) = 0 \text{ für } x \notin C,$$

$$\partial_{y,C}s(x) = \partial_y s(x) \text{ für } x \in C, \ \partial_{y,C}s(x) = 0 \text{ für } x \notin C$$

sind,

- g der universelle Rekonstruktionskernel ist, d. h. der vektorielle Kernel der universellen Rekonstruktion, der im Fourierraum durch den folgenden Ausdruck wiedergegeben wird:

$$\vec{g}(k) = i\frac{k}{k^2}$$

und

- das Symbol · das Skalarprodukt der Faltung bedeutet, d. h. $(\vec{g}\cdot\nabla_C s)(x) = (g_x {}^* \partial_{x,C} s)(x) + (g_y {}^* \partial_{y,C} s)(x)$, wobei * das gewöhnliche Faltungsprodukt der Funktionen bedeutet,

wobei die besagte Singularitätsmessung auf der Differenz zwischen dem gemessenen Signalwert am besagten Punkt x und dem aus der besagten Rekonstruierungsformel abgeleiteten Signalwert für den besagten Punkt x beruht, wobei die Implementierung der besagten Rekonstruierungsformel an die besagte lokale Umgebung angepasst wird, indem diese auf die besagte lokale Umgebung beschränkt wird.

2. Methode nach Anspruch 1, **dadurch gekennzeichnet, dass** diese auch einen dritten Schritt c) einschließt, welche die Durchführung mindestens einer logarithmischen Transformation der besagten Singularitätsmessung umfasst, welche die Abhängigkeit von der Messung der Anzahl der Punkte des Signals unterdrückt, wodurch ein Singularitätsexponent für jeden Punkt des Signals erhalten wird.

3. Methode nach Anspruch 2, **dadurch gekennzeichnet, dass** diese vor der Durchführung des Schritts a) die Erhaltung einer stabilen Ableitungsfunktion des besagten digitalen Signals umfasst und dass diese in dem Schritt b) für jeden Punkt des besagten abgetasteten digitalen Signals die Erhaltung einer Singularitätsmessung der Funktion an diesen Punkt umfasst, wobei die Beiträge einer lokalen Umgebung des Punkts und der Wert der Ableitung an allen Punkten der besagten lokalen Umgebung gewichtet werden.

4. Methode nach Anspruch 3, **dadurch gekennzeichnet, dass** die stabile Ableitung des digitalen Signals, die dem Schritt a) vorausgeht, durch die Ableitung von Erhöhungen um einen Punkt nach rechts oder Erhöhungen um einen halben zentrierten Punkt erhalten werden, wobei die Ableitung in beiden Fällen im Fourierraum durch die Multiplikation des Signals mit den entsprechenden Ableitungskernen erhalten wird, wobei unter der Annahme, dass es $N_x$ Punkte in einer Koordinatenrichtung x zur Ableitung gibt, die Ableitungskerne wie folgt ausgedrückt werden:

Differenz von einem Punkt nach rechts:

$$(\widehat{\partial}_x)_n = (e^{2\pi i\frac{n}{N_x}} - 1)$$

Differenz von einem halben, zentrierten Punkt:

$$(\widehat{\partial}_x)_n = \begin{cases} i\sin(\pi\frac{n}{N_x}); n < N_x/2 \\ -i\sin(\pi\frac{N_x - n}{N_x}); n \geq N_x/2 \end{cases}$$

Welche die folgenden Schritte umfasst:

- Anwendung der Fouriertransformation auf das besagte Signal;
- Multiplikation einer Kopie der Fouriertransformation des Signals mit dem mit jeder der d Komponenten verknüpften Kern; und

- Anwendung der Gegen-Transformation auf diese d Komponenten.

5. Methode nach Anspruch 2, **dadurch gekennzeichnet, dass** die logarithmische Transformation des Schritts c), bei der es sich mindestens um eine handelt, wie folgt durchgeführt wird:

- für jeden Punkt des abgetasteten digitalen Signals wird die Messung in Schritt b) genommen und durch das arithmetische Mittel der Messung aller Punkte dividiert; und
- der Logarithmus des Ergebnisses wird durch den Logarithmus der Mindestgröße des abgetasteten digitalen Signals dividiert, welche als die d-nste Wurzel der Gesamtanzahl von Punkten des Signals definiert wird, wobei d die Abmessung oder Anzahl der inhärenten Variablen des Signals ist.

6. Methode nach Anspruch 5, **dadurch gekennzeichnet, dass** die in Schritt b) definierte Singularitätsmessung mittels der folgenden Stufen berechnet wird:

- Berechnung des Umgebungsvektors der (2 x d) ersten Nachbarn eines Basispunkts x, wobei die ersten Nachbarn des Punkts x erhalten werden, indem nacheinander zu jeder einzelnen und nur jeweils einer der Koordinatenkennziffern des besagten Punkts x zuerst -1 und dann +1 addiert wird, wobei der Umgebungsvektor von (2 x d)+1 Komponenten gebildet wird, dessen erste Komponente der Wert des Signals am Punkt x ist, die zweite der Wert des Signals an dem Punkt ist, der durch die Addition von -1 zur ersten Koordinate von x erhalten wurde, der dritte der Wert des Signals an dem Punkt ist, der durch Addition von +1 zur ersten Koordinate von x erhalten wurde, der vierte der Wert des Signals an dem Punkt ist, der durch Addition von -1 zur zweiten Koordinate von x erhalten wurde und so weiter;
- Extraktion der Tendenz dieses Vektors, der als die Summe seiner Komponenten dividiert durch ((2 x d)-1) definiert wird, und Anwendung dieser Tendenz auf den Umgebungsvektor, wobei diese zur Komponente mit Bezug auf den Basispunkt x addiert und von den anderen Komponenten subtrahiert wird, auf solche Weise, dass dieser neu erhaltene Umgebungsvektor ein arithmetisches Mittel von null besitzt;
- Anwendung eines lokalen Gradientenoperatoren auf den besagten Nullmittelvektor, der (2 x d)+1 Gradientenvektoren zurückgibt, von denen jeder d Komponenten besitzt, die den lokalen Gradienten definieren;
- Aufhebung der Komponenten des besagten, mit dem Punkt x verknüpften Gradienten;
- Anwendung eines lokalen Rekonstruierungsoperators auf den besagten lokalen Gradienten mit den aufgehobenen Komponenten, wobei der Rekonstruierungsoperator eindeutig mit dem besagten lokalen Gradientenoperator verknüpft ist und einen Vektor von (2 x d)+1 Komponenten erhält, der als ein geschätztes Signal bezeichnet wird;
- Erneute Anwendung des lokalen Gradientenoperators auf den besagten Vektor der (2 x d)+1 Komponenten bzw. das geschätzte Signal und Erhalt von (2 x d)+1 Vektoren, einen für jeden Punkt der lokalen Umgebung, von denen jeder d Komponenten besitzt, welche den geschätzten lokalen Gradienten für diese Umgebung definieren;
- Erhalt von (2 x d)+1 Vektoren mit d Komponenten, welche die Differenz in den Gradienten zwischen dem besagten lokalen Gradienten und dem besagten lokalen geschätzten Gradienten ausdrücken; und
- Erhalt der mit dem Punkt x verknüpften Singularitätsmessung durch Verwendung dieser (2 x d)+1 Gradientendifferenzvektoren.

7. Methode nach Anspruch 6, **dadurch gekennzeichnet, dass** der auf den Vektor von (2 x d)+1 Komponenten besagte angewendete lokale Gradientenoperator für jede Umgebung eines Punkts x, der von dem Vektor von (2 x d)+1 Komponenten definiert wird, die den Wert des Signals beim Punkt x und dessen (2 x d) Nachbarn enthalten, die Ausführung einer lokalen Fouriertransformation umfasst, die nur diese Umgebung berücksichtigt.

8. Methode nach Anspruch 7, **dadurch gekennzeichnet, dass** die besagte lokale Fouriertransformation als eine Matrix von ((2 x d)+1) x ((2 x d)+1)) konstruiert ist, deren Elemente alle einen Wert von 1 besitzen, mit Ausnahme der der Hauptdiagonale und der der angrenzenden Diagonalen, wobei alle Elemente auf der Hauptdiagonalen mit Ausnahme des ersten auf der linken Seite, das einen Wert von 1 besitzt, den Wert der komplexen Exponentialfunktion $2 \times \pi \times i/3$ besitzen, wobei i die Quadratwurzel von -1 ist und die Elemente der angrenzenden Diagonalen fortlaufend den Wert 1, die Exponentiale von $-2 \times \pi \times i/3$, 1 und so sukzessiv besitzen, beginnend von oben links nach unten rechts.

9. Methode nach Anspruch 8, **dadurch gekennzeichnet, dass** die lokale Fouriertransformation berechnet wird, indem als Matrix die beschriebene Matrix von ((2 x d)+1) x ((2 x d)+1) auf einen Umgebungsvektor von (2 x d)+1 Komponenten angewendet wird.

**10.** Methode nach Anspruch 10, **dadurch gekennzeichnet, dass** die lokale Gegen-Fouriertransformation berechnet wird, indem die umgekehrte Matrix der in Anspruch 8 beschriebenen Matrix angewendet wird, die immer existiert.

**11.** Methode nach Anspruch 10, **dadurch gekennzeichnet, dass** für jede Umgebung eines Punkts x, der von einem Vektor $\vec{p}$ von (2 x d)+1 Komponenten definiert wird, die Anwendung des besagten lokalen Gradientenoperators auf $\vec{p}$ ein Resultat ergibt, das von dem lokalen Gradientenvektor für den Punkt x und die Punkte dessen Umgebung ausgedrückt wird und die folgenden Schritte umfasst:

- Die Anwendung der lokalen Fouriertransformation auf $\vec{p}$ ;
- Die Konstruktion der Ableitung durch eine gegebene Koordinatenrichtung, indem die Komponente des Vektors $\vec{p}$ der Fouriertransformation, der mit dem Punkt verknüpft ist, der erhalten wird, indem die Koordinaten des Punkts x durch die Addition von -1 zum Index der besagten Koordinatenrichtung verändert werden, mit $i\sqrt{3}$ multipliziert wird und indem die Komponente des besagten selben Vektors, der erhalten wird, indem die Koordinaten des Punkts x durch die Addition von +1 zum besagten Koordinatenindex verändert werden, mit $-i\sqrt{3}$ multipliziert wird, und die verbleibenden Komponenten aufgehoben werden, wodurch d Ableitungsvektoren erhalten werden, einer für jede Koordinate;
- Die Anwendung der lokalen Gegen-Fouriertransformation auf diese d Vektoren mit (2 x d)+1 Komponenten, wobei jeder Vektor somit die Ableitung durch jede der d Koordinatenrichtungen an allen Punkten der lokalen Umgebung darstellt; und
- Die Umordnung der Komponenten dieser d Vektoren, wobei für jeden der Punkte der lokalen Umgebung die mit diesem Punkt verknüpften d Ableitungen zusammen gruppiert werden, wobei (2 x d)+1 lokale Gradientenvektoren mit jeweils d Komponenten erhalten werden, die den Gradienten an jedem Punkt der lokalen Umgebung reproduzieren.

**12.** Methode nach Anspruch 6, **dadurch gekennzeichnet, dass** der auf den lokalen Gradienten besagte angewendete Rekonstruierungsoperator als die Umkehrung des lokalen Gradientenoperators definiert wird und die folgenden Schritte umfasst:

- Die Anwendung der lokalen Fouriertransformation auf die d Ableitungsvektoren durch jede Koordinatenrichtung, von denen jede (2 x d)+1 Komponenten besitzt;
- Die Konstruktion des Rekonstruierungsvektors durch eine gegebene Koordinatenrichtung, indem die Komponenten des Vektors $\vec{p}$ der lokalen Fouriertransformation, der mit dem Punkt verknüpft ist, der erhalten wird, indem die Koordinaten des Punkts x durch die Addition von -1 zum Index der besagten Koordinatenrichtung verändert werden, durch $i\sqrt{3}$ dividiert wird und indem die Komponente des besagten selben Vektors, der erhalten wird, indem die Koordinaten des Punkts x durch die Addition von +1 zum besagten Koordinatenindex verändert werden, durch $-i\sqrt{3}$ dividiert wird und die verbleibenden Komponenten aufgehoben werden, wobei d Rekonstruierungsvektoren durch eine Richtung erhalten werden, einer für jede Koordinate;
- Die Hinzufügung dieser d Rekonstruierungsvektoren; und
- Die Anwendung der lokalen Gegen-Fouriertransformation auf den Vektor von (2 x d)+1 Komponenten, der aus dem vorherigen Schritt resultiert.

**13.** Methode nach Anspruch 6, **dadurch gekennzeichnet, dass** die letzte Stufe des Schritts b), mit dem die mit dem Punkt x verknüpfte Singularitätsmessung erhalten wird, Folgendes umfasst:

- Die Zurückbehaltung der d mit dem Punkt x verknüpften Komponenten von den erhaltenen (2 x d)+1 Gradientendifferenz-Vektoren; und
- Der Erhalt der Singularitätsmessung als Quadratwurzel der Summe der Quadrate dieser d Komponenten,

wobei eine lokale Korrelations-Singularitätsmessung erhalten wird, die zur Messung der Unvorhersagbarkeit eines gegebenen Punkts geeignet ist.

**14.** Methode nach Anspruch 6, **dadurch gekennzeichnet, dass** die letzte Stufe des Schritts b), mit dem die mit dem Punkt x verknüpfte Singularitätsmessung erhalten wird, Folgendes umfasst:

- Die Heranziehung eines Hyperwürfels mit d Dimensionen, der einen gegebenen Punkt x umgibt und aus den Punkten besteht, die durch Addition von -1, 0 bzw. +1 zu jedem Koordinatenindex von x erhalten werden, die $3^d$ Punkte bereitstellen;
- Die Zurückbehaltung des Vektors mit d Dimensionen, der mit der zentralen (mit dem Basispunkt verknüpften) Komponente der Gradientendifferenz verknüpft ist, für jeden Punkt des besagten Hyperwürfels; und
- Die Addition dieser $3^d$ Vektoren und die Berechnung des Skalarprodukts des resultierenden Vektors mit dem Gradientendifferenzvektor mit d Dimensionen, der mit dem Punkt x verknüpft ist,

wobei ein Ausrichtungsindex der Gradientendifferenzen erhalten wird, der die Deduktion der Existenz einer räumlichen Kohärenz zwischen den Fehlern erlaubt, die begangen werden, wenn der zentrale Punkt bei der Rekonstruierung des Signals ausgelassen wird, wobei eine Unterscheidung zwischen dem Rauschen einer zufälligen Ausrichtung und dem kohärenten Signal erlaubt wird.

**15.** Methode nach Anspruch 6, **dadurch gekennzeichnet, dass** diese zusätzlich Folgendes umfasst:

- Den Erhalt einer stabilen Ableitungsfunktion des besagten digitalen Signals vor der Durchführung von Schritt a), das in regelmäßigen Intervallen abgetastet wird, und den Erhalt in Schritt b) einer Singularitätsmessung der Funktion an diesem Punkt für jeden Punkt des besagten abgetasteten digitalen Signals, wobei die Beiträge einer lokalen Umgebung des Punkts und des Werts der Ableitung an allen Punkten der besagten lokalen Umgebung wie folgt gewichtet werden;
- Den Erhalt der Gradientenenergie des oben erwähnten Hyperwürfels, indem quadrierten Module der Gradienten jedes Punkts des Hyperwürfels hinzugefügt werden;
- Den Erhalt einer lokalen Korrelations-Singularitätsmessung am Punkt x mittels der folgenden Operationen:

- Die Zurückbehaltung der d mit dem Punkt x verknüpften Komponenten von den erhaltenen (2 x d)+1 Gradientendifferenzvektoren; und
- Der Erhalt der Singularitätsmessung als Quadratwurzel der Summe der Quadrate dieser d Komponenten; und

- Den Erhalt der globalen Korrelations-Singularitätsmessung als Produkt der lokalen Korrelations-Singularitätsmessung durch die Quadratwurzel des absoluten Werts des Ausrichtungsindex der lokalen Gradientendifferenzen, wobei Letztere durch die Gradientenenergie des Hyperwürfels dividiert werden.

**16.** Methode nach Anspruch 15, **dadurch gekennzeichnet, dass** die stabile Ableitung des digitalen Signals, die dem Schritt a) vorhergeht, durch die Ableitung von Erhöhungen um einen Punkt nach rechts oder Erhöhungen eines zentrierten halben Punkts erhalten wird, wobei die Ableitung in beiden Fällen im Fourierraum definiert wird, indem das Signal mit den entsprechenden Ableitungskernen multipliziert wird, wobei angenommen wird, dass $N_x$ Punkte in einer Koordinatenrichtung x existieren, in der die besagten Ableitungskerne abgeleitet werden, wobei die Ableitungskerne wie folgt ausgedrückt werden:

Differenz von einem Punkt nach rechts:

$$(\hat{\partial}_x)_n = (e^{2\pi i \frac{n}{N_x}} - 1)$$

Differenz von einem halben, zentrierten Punkt:

$$(\hat{\partial}_x)_n = \begin{cases} i\sin(\pi \frac{n}{N_x}); n < N_x/2 \\ -i\sin(\pi \frac{N_x - n}{N_x}); n \geq N_x/2 \end{cases}$$

Welche die folgenden Schritte umfasst:

- Anwendung der Fouriertransformation auf das besagte Signal;
- Multiplikation einer Kopie der Fouriertransformation des Signals mit dem mit jeder der d Komponenten verknüpften Kern; und
- Anwendung der Gegen-Transformation auf diese d Komponenten.

**17.** Methode nach Anspruch 6, **dadurch gekennzeichnet, dass** das besagte digitale Signal eines der Folgenden ist:

Zeitreihe, Transekte physikalischer Variablen, die aus einer Gruppe ausgewählt wurden, die Temperatur, Konzentration, chemische Spezies, elektrische Stärken, Stärke, Druck und Dichte umfassen, im Fall von d=1;
Bilder reeller Umgebungen wie fotografische Bilder, biomedizinische Bilder wie zum Beispiel Ultraschalluntersuchungen, Röntgen- und Radiodiagnosen sowie nuklearmedizinische Bilder im Allgemeinen wie Gammagrafen, Computertomografien, PET, Kernspintomografien und mittels irgendeiner anderen Technologie erzeugte Bilder, Mikroskopaufnahmen optischer, elektronischer und irgendeiner anderen Art, geophysikalische Bilder, Bilder, die von Satelliten oder sonst wie über die Luft, über Land, unterirdisch oder auf irgendeine andere Art übertragen werden, verteilte Variablen, die von Sensoren über Land, See, Luft, Satelliten oder anderen Medien erfasst werden, im Falle von d=2;
Bildzeitfolgen und zweidimensionale Variablen der vorhergehenden Fälle in dreidimensionalen Volumen im Falle von d=3;
Zeitfolgen von Variablen in Volumen im Falle von d=4.

**18.** Methode nach Anspruch 6, **dadurch gekennzeichnet, dass** das fragliche abgetastete digitale Signal eine Variable in einer turbulenten Strömung darstellt und dass dieses den Erhalt der Singularitätsexponenten zur Stabilisierung der besagten Variablen umfasst, um eine dynamische Analyse der Strömung durchzuführen, wobei neue Größen wie die Wirbeldiffusität der Variablen, die Wirbelviskosität der Strömung und andere repräsentative Größen der ungelösten Skalen der Strömung erhalten werden.

**19.** System zur Analyse von Singularitäten in digitalen Signalen physikalischer Phänomene, **dadurch gekennzeichnet, dass** diese Folgendes umfasst:

- Mittel zum Erhalt einer lokalen Umgebung für jeden Punkt x des Signals, welche die ersten Nachbarn des besagten Punkts x umfasst; und
- Mittel zur Berechnung einer Singularitätsmessung für jeden Punkt x des Signals, wobei ein Maß der Signal-Rekonstruierbarkeit beruhend auf der verknüpften lokalen Umgebung bereitgestellt wird, das anhand der Interferenz des Signalwerts an dem besagten Punkt basierend auf dem Wert der Punkte der besagten lokalen Umgebung konstruiert wird, wobei die folgende Rekonstruierungsformel verwendet wird

$$s(x) = (g \cdot \nabla_C s)(x)$$

Wobei:

- s ein gegebenes Signal ist,
- C die lokale Umgebung von x ist,
- $\nabla_C s$ der wesentliche Gradient von s über der besagten Umgebung ist, d. h. der auf die lokale Umgebung begrenzte Gradient, dessen Komponenten

$$\partial_{x,C} s(x) = \partial_x s(x) \text{ für } x \in C, \ \partial_{x,C} s(x) = 0 \text{ für } x \notin C,$$

$$\partial_{y,C} s(x) = \partial_y s(x) \text{ für } x \in C, \ \partial_{y,C} s(x) = 0 \text{ für } x \notin C$$

sind,
- g der universelle Rekonstruktionskernel ist, d. h. der vektorielle Kernel der universelle Rekonstruktion, der im Fourierraum durch den folgenden Ausdruck wiedergegeben wird:

$$\vec{g}(k) = i\frac{k}{k^2}$$

und

- das Symbol · das Skalarprodukt der Faltung bedeutet, d. h. $(\vec{g} \cdot \nabla_c s)(x) = (g_x * \partial_{x,c}s)(x) + (g_y * \partial_{y,c}s)(x)$, wobei * das gewöhnliche Faltungsprodukt der Funktionen bedeutet,

wobei die besagte Singularitätsmessung auf der Differenz zwischen dem gemessenen Signalwert am besagten Punkt x und dem aus der besagten Rekonstruierungsformel abgeleiteten Signalwert für den besagten Punkt x beruht, wobei die Implementierung der besagten Rekonstruierungsformel an die besagte lokale Umgebung angepasst wird, indem diese auf die besagte lokale Umgebung beschränkt wird.

20. System nach Anspruch 19, **dadurch gekennzeichnet, dass** dieses auch Mittel zur Durchführung mindestens einer logarithmischen Transformation der besagten Singularitätsmessung umfasst, welche die Abhängigkeit von der Anzahl der Punkte des Signals unterdrückt, das einen Singularitätsexponenten für jeden Punkt des Signals bereitstellt.

21. System nach Anspruch 20, **dadurch gekennzeichnet, dass** diese zusätzlich Folgendes umfasst:

- Mittel zur Erhaltung einer stabilen Ableitungsfunktion des digitalen Signals, das in regelmäßigen Intervallen abgetastet wird; und
- Mittel zur Erhaltung einer Singularitätsmessung des Signals an diesen Punkt für jeden Punkt des besagten abgetasteten digitalen Signals, wobei die Beiträge der besagten lokalen Umgebung des Punkts und der Wert der besagten stabilen Ableitung an allen Punkten der besagten lokalen Umgebung gewichtet werden.

## Revendications

1. Procédé pour l'analyse de singularités dans des signaux numériques de phénomènes physiques, **caractérisé en ce qu'**il comprend les phases suivantes :

a) déterminer pour chaque point x du signal un environnement local c comprenant les premiers voisins dudit point x ; et
b) calculer pour chaque point x du signal un mesurage de singularité fournissant une mesure de reconstructibilité de signal basée sur l'environnement local associé, construit à partir de l'inférence de la valeur du signal audit point sur la base de la valeur des points dudit environnement local en utilisant la formule de reconstruction suivante

$$s(x) = (g \cdot \nabla_C s)(x)$$

où :

- $s$ est un signal donné,
- $\nabla_C s$ est le gradient essentiel de s sur ledit environnement local, c'est-à-dire, le gradient restreint à l'environnement local, dont les composants sont

$$\partial_{x,C}s(x) = \partial_x s(x) \text{ pour } x \in C, \ \partial_{x,c}s(x) = 0 \text{ pour } x \notin C,$$

$$\partial_{y,C}s(x) = \partial_y s(x) \text{ pour } x \in C, \ \partial_{y,c}s(x) = 0 \text{ pour } x \notin C,$$

- g est le noyau de reconstruction universelle, c'est-à-dire, le noyau vectoriel de reconstruction universelle, qui dans l'espace de Fourier est donné par l'expression :

$$\vec{g}(k) = i\frac{k}{k^2}$$

et
- le symbole · signifie produit scalaire de convolution, c'est-à-dire, $(\vec{g} \cdot \nabla_c s)(x) = (g_x * \partial_{x,c}s)(x) + (g_y * \partial_{y,c}s)(x)$, où * signifie le produit de convolution ordinaire de fonctions,

dans lequel ledit mesurage de singularité est basé sur la différence entre la valeur de signal mesurée audit point x et la valeur de signal inférée pour ledit point x à partir de ladite formule de reconstruction, l'implémentation de ladite formule de reconstruction étant adaptée audit environnement local en la restreignant audit environnement local.

2. Procédé selon la revendication 1, **caractérisé en ce qu'**il comprend également une troisième phase c) qui consiste à réaliser au moins une transformation logarithmique sur ledit mesurage de singularité, qui supprime la dépendance du mesurage du nombre de points du signal, en obtenant un exposant de singularité pour chaque point du signal.

3. Procédé selon la revendication 2, **caractérisé en ce qu'**il comprend, avant la réalisation de la phase a), l'obtention d'une fonction dérivée stable dudit signal numérique qui est échantillonné à intervalles réguliers, et **en ce que** dans la phase b) il comprend l'obtention pour chaque point dudit signal numérique échantillonné un mesurage de singularité de la fonction à ce point, en pondérant les contributions d'un environnement local du point et la valeur de la dérivée à tous les points dudit environnement local.

4. Procédé selon la revendication 3, **caractérisé en ce que** la dérivée stable du signal numérique qui précède la phase a) est obtenue par dérivée d'accroissements d'un point à droite ou d'accroissements d'un demi-point centrés, la dérivée étant définie dans les deux cas dans l'espace de Fourier par multiplication du signal par les coeurs dérivés correspondants, où en supposant qu'il y a $N_x$ points dans une direction de coordonnées x devant être dérivés, les coeurs dérivés sont exprimés comme suit :

Différence d'un point à droite :

$$(\hat{\partial}_x)_n = (e^{2\pi i \frac{n}{N_x}} - 1)$$

Différence d'un demi-point centré :

$$(\hat{\partial}_x)_n = \begin{cases} i\sin(\pi\frac{n}{N_x}); n < N_x/2 \\ -i\sin(\pi\frac{N_x - n}{N_x}); n \geq N_x/2 \end{cases}$$

comprenant les phases suivantes :

- application de la transformée de Fourier audit signal ;
- multiplication d'une copie de la transformée de Fourier du signal par le coeur associé à chacun des composants d ; et
- application de l'anti-transformée à ces composants d.

**5.** Procédé selon la revendication 2, **caractérisé en ce que** la transformation logarithmique de la phase c) qui est au moins au nombre de une, est réalisée de la façon suivante :

- pour chaque point du signal numérique échantillonné le mesurage obtenu dans la phase b) est pris et divisé par la moyenne des mesurages de tous les points ; et
- le logarithme du résultat est divisé par le logarithme de l'échelle minimale du signal numérique échantillonné, qui est défini comme étant la racine d-nième du nombre total de points du signal, où d est la dimension ou le nombre de variables inhérent au signal.

**6.** Procédé selon la revendication 5, **caractérisé en ce que** le mesurage de singularité défini dans la phase b) est calculé en suivant les étapes suivantes :

- calculer le vecteur d'environnement des premiers voisins (2 x d) d'un point de référence x, obtenir les premiers voisins du point x en ajoutant consécutivement à chacun et seulement un des indices de coordonnée dudit point x, d'abord -1 et ensuite +1, former le vecteur d'environnement de composants (2 x d)+1, dont le premier composant est la valeur du signal au point x, le second la valeur du signal au point obtenu en ajoutant -1 à la première coordonnée de x, le troisième la valeur du signal au point obtenu en ajoutant +1 à la première coordonnée de x, le quatrième la valeur du signal au point obtenu en ajoutant -1 à la seconde coordonnée de x, et ainsi de suite successivement ;
- extraire la tendance de ce vecteur, qui est défini comme étant la somme de ses composants divisée par ((2 x d)-1) et appliquer cette tendance au vecteur d'environnement, en l'ajoutant au composant se rapportant au point de référence x et en le soustrayant des autres composants, de façon à ce que ce vecteur d'environnement nouvellement obtenu ait une moyenne zéro ;
- appliquer un opérateur de gradient local audit vecteur de moyenne zéro, qui renvoie des vecteurs de gradient (2 x d)+1 chacun d'eux de composants d, qui définissent le gradient local :
- annuler les composants dudit gradient local associés au point x ;
- appliquer audit gradient local, avec les composants annulés, un opérateur de reconstruction local associé de manière non équivoque audit opérateur de gradient local en obtenant un vecteur de composants (2 x d)+1, qui est dénommé signal estimé ;
- appliquer encore une fois l'opérateur de gradient local audit vecteur de composants (2 x d)+1 ou signal estimé et obtenir des vecteurs (2 x d)+1, un pour chaque point de l'environnement local, chacun de composants d, qui définissent le gradient local estimé pour cet environnement ;
- obtenir des vecteurs (2 x d)+1 de composants d qui expriment la différence en gradients entre ledit gradient local et ledit gradient local estimé localement, et
- obtenir en utilisant ces vecteurs (2 x d)+1 de différence en gradients le mesurage de singularité associé au point x.

**7.** Procédé selon la revendication 6, **caractérisé en ce que** ledit opérateur de gradient local appliqué au vecteur de composants (2 x d)+1 comprend, pour chaque environnement d'un point x défini par le vecteur de composants (2 x d)+1 qui inclut la valeur du signal au point x et à ses voisins (2 x d), l'exécution d'une transformée de Fourier locale, qui prend uniquement en compte cet environnement.

**8.** Procédé selon la revendication 7, **caractérisé en ce que** ladite transformée de Fourier locale est construite comme une matrice de ((2 x d)+1)) x ((2 x d)+1)), dont les éléments ont tous une valeur de 1 à l'exception de ceux de la diagonale principale et des diagonales adjacentes, où tous les éléments de la diagonale principale à l'exclusion du premier à gauche, qui vaut 1, valent l'exponentielle complexe 2 x $\Pi$ x i/3 où i est la racine carrée de -1 et les éléments des diagonales adjacentes valent consécutivement 1, exponentielle de -2 x $\Pi$ x i/3, 1, et ainsi de suite successivement, en partant du haut à gauche vers le bas à droite.

**9.** Procédé selon la revendication 8, **caractérisé en ce que** la transformée de Fourier locale est calculée en appliquant matriciellement la matrice décrite de ((2 x d)+1 )) x ((2 x d)+1)) à un vecteur d'environnement de composants (2 x d)+1.

**10.** Procédé selon la revendication 9, **caractérisé en ce que** l'anti-transformée de Fourier locale est calculée en appliquant la matrice inverse de celle décrite dans la revendication 8, qui existe toujours.

**11.** Procédé selon la revendication 10, **caractérisé en ce que** pour chaque environnement d'un point x défini par un vecteur $\vec{p}$ de composants (2 x d)+1, l'application à p dudit opérateur de gradient local donne un résultat exprimé par le vecteur de gradient local pour le point x et les points de son environnement et comprend les phases suivantes :

- appliquer la transformée de Fourier locale à $\vec{p}$ ;
- construire la dérivée dans toute une direction de coordonnées donnée en multipliant en multipliant par i√3 le composant du vecteur de transformée de Fourier de p associé au point qui est obtenu lorsque les coordonnées du point x sont modifiées en ajoutant -1 à l'indice de ladite direction de coordonnées et en multipliant par - i√3 le composant dudit même vecteur obtenu en modifiant les coordonnées du point x par l'ajout de +1 audit indice de coordonnée ;
- appliquer l'anti-transformée de Fourier à ces vecteurs d de composants (2 x d)+1, chaque vecteur représentant ainsi la dérivée tout le long de chacune des directions de coordonnées d à tous les points de l'environnement local ; et
- réordonner les composants de ces vecteurs d, en regroupant ensemble pour chacun des points de l'environnement local les dérivées d associées à ce point, en obtenant des vecteurs de gradient local (2 x d)+1, chacun de composants d, qui reproduisent le gradient à chaque point de l'environnement local.

**12.** Procédé selon la revendication 6, **caractérisé en ce que** ledit opérateur de reconstruction appliqué au gradient local est défini comme l'inverse de l'opérateur de gradient local, et comprend les phases suivantes :

- appliquer la transformée de Fourier locale aux vecteurs de dérivée d tout le long de chaque direction de coordonnées, chacune de composants (2 x d)+1 ;
- construire le vecteur de reconstruction tout le long d'une direction de coordonnées donnée en divisant par i√3 le composant du vecteur de transformée de Fourier de $\vec{p}$ associé au point qui est obtenu lorsque les coordonnées du point x sont modifiées en ajoutant -1 à l'indice de ladite direction de coordonnées et en divisant par - i√3 le composant dudit même vecteur obtenu lorsque les coordonnées du point x sont modifiées en ajoutant +1 audit indice de coordonnées, et en annulant les composants restants, en obtenant ainsi des vecteurs de reconstruction d tout le long d'une direction, un pour chaque coordonnée ;
- ajouter ces vecteurs de reconstruction d ; et
- appliquer l'anti-transformée de Fourier locale au vecteur de composants (2 x d)+1 résultant de l'étape précédente.

**13.** Procédé selon la revendication 6, **caractérisé en ce que** l'étape finale de la phase b), par laquelle est obtenu le mesurage de singularité associé au point x, comprend :

- retenir des vecteurs (2 x d)+1 obtenus de différence en gradient les composants d associés au point x, et
- obtenir le mesurage de singularité comme la racine carrée de la somme des carrés de ces composants d un mesurage de singularité de corrélation locale étant ainsi obtenu qui est apte à mesurer l'imprévisibilité d'un point donné.

**14.** Procédé selon la revendication 6, **caractérisé en ce que** l'étape finale de la phase b), par laquelle est obtenu le mesurage de singularité associé au point x, comprend :

- pendre un hypercube de dimension d qui entoure un point x donné, constitué des points obtenus en ajoutant -1, 0 ou +1 à chaque indice de coordonnée de x qui fournit des points $3^d$ ;
- retenir pour chaque point dudit hypercube le vecteur de dimension d associé au composant central (associé au point de référence) de différence en gradient, et
- ajouter ces vecteurs $3^d$, et calculer le produit scalaire du vecteur en résultant avec le vecteur de dimension d de différence en gradient associé au point x,

par lequel on obtient un indice d'alignement de différences en gradient qui permet la déduction de l'existence d'une cohérence spatiale entre les erreurs commises en omettant le point central lorsque le signal est construit, permettant une distinction entre bruit d'orientation aléatoire et signal cohérent.

**15.** Procédé selon la revendication 14, **caractérisé en ce qu'**il comprend en outre :

- avant la réalisation de la phase a), l'obtention d'une fonction dérivée stable dudit signal numérique qui est échantillonné à intervalles réguliers, et l'obtention dans la phase b) pour chaque point dudit signal numérique échantillonné un mesurage de singularité de la fonction à ce point, en pondérant comme suit les contributions d'un environnement local du point et la valeur de la dérivée à tous les points dudit environnement local ;
- l'obtention de l'énergie du gradient de l'hypercube mentionné ci-dessus en ajoutant les modules carrés des gradients de chaque point de l'hypercube ;
- l'obtention d'un mesurage de singularité de corrélation locale au point x au moyen des opérations suivantes :
- retenir des vecteurs (2 x d)+1 obtenus de différence en gradients les composants d associés au point x, et
- obtenir le mesurage de singularité comme la racine carrée de la somme des carrés de ces composants d ; et
- l'obtention du mesurage de singularité de corrélation globale comme le produit du mesurage de singularité de corrélation locale par la racine carrée de la valeur absolue de l'indice d'alignement de différences locales en gradient, la dernière divisée par l'énergie du gradient de l'hypercube.

**16.** Procédé selon la revendication 15, **caractérisé en ce que** la dérivée stable du signal numérique qui précède la phase a) est obtenue par dérivée d'accroissements d'un point à droite ou d'accroissements d'un demi-point centrés, la dérivée étant définie dans les deux cas dans l'espace de Fourier par multiplication du signal par les coeurs dérivés correspondants, où en supposant qu'il y a $N_x$ points dans une direction de coordonnées x où lesdits coeurs dérivés doivent être dérivés, les coeurs dérivés sont exprimés comme suit :

Différence d'un point à droite :

$$(\widehat{\partial}_x)_n = (e^{2\pi i \frac{n}{N_x}} - 1)$$

Différence d'un demi-point centré :

$$(\widehat{\partial}_x)_n = \begin{cases} i\sin(\pi \frac{n}{N_x}); n < N_x/2 \\ -i\sin(\pi \frac{N_x - n}{N_x}); n \geq N_x/2 \end{cases}$$

comprenant les phases suivantes :

- application de la transformée de Fourier audit signal ;
- multiplication d'une copie de la transformée de Fourier du signal par le coeur associé à chacun des composants d ; et
- application de l'anti-transformée à ces composants d.

**17.** Procédé selon la revendication 6, **caractérisé en ce que** ledit signal numérique échantillonné est l'un parmi :

séries chronologiques, transects de variables physiques sélectionnés dans un groupe comprenant température, concentration d'espèces chimiques, intensités électriques, force, pression, et densité, dans le cas où d=1 ;
images d'environnements réels, telles que les images photographiques, images biomédicales telles que les échogrammes, rayons X et radiodiagnostics et images de médecine nucléaire en général, telles que les gammagraphies, TDM, TEP, IRM, et images obtenues au moyen de toute autre technique, images microscopiques d'optique, électroniques et de tout autre type, images géophysiques, images obtenues à partir de satellites ou d'engins transportés par air, terre, immergés ou de tout autre type, variables distribuées capturées en deux dimensions par des capteurs sur terre, sur mer, dans l'air, dans des satellites et par d'autres moyens dans le cas où d=2 ;
séquences chronologiques d'images et variables à deux dimensions des cas précédents dans des volumes à trois dimensions dans le cas où d=3 ;
séquences chronologiques de variables dans volume dans le cas où d=4.

**18.** Procédé selon la revendication 6, **caractérisé en ce que** le signal numérique échantillonné en question est représentatif d'une variable dans un fluide turbulent, et **en ce qu'**il comprend l'obtention d'exposants de singularité pour la stabilisation de ladite variable afin de réaliser une analyse dynamique du fluide, l'obtention de nouvelles grandeurs telles que la diffusion turbulente de la variable, la viscosité turbulente du fluide et d'autres grandeurs représentatives des échelles non résolues du fluide.

**19.** Système pour l'analyse de singularités dans des signaux numériques de phénomènes physiques, **caractérisé en ce qu'**il comprend :

- des moyens pour obtenir pour chaque point x du signal un environnement local qui comprend les premiers voisins dudit point x ; et
- des moyens pour calculer pour chaque point x du signal un mesurage de singularité fournissant une mesure de reconstructibilité de signal basée sur l'environnement local associé, construit à partir de l'inférence de la valeur du signal audit point sur la base de la valeur des points dudit environnement local en utilisant la formule de reconstruction suivante

$$s(x) = (g \cdot \nabla_C s)(x)$$

où :
- s est un signal donné,
- c est l'environnement local de x,
- $\nabla_c s$ est le gradient essentiel de s sur cet environnement, c'est-à-dire, le gradient restreint à l'environnement local, dont les composants sont

$$\partial_{x,C} s(x) = \partial_x s(x) \text{ pour } x \in C, \ \partial_{x,C} s(x) = 0 \text{ pour } x \notin C,$$

$$\partial_{y,C} s(x) = \partial_y s(x) \text{ pour } x \in C, \ \partial_{y,C} s(x) = 0 \text{ pour } x \notin C,$$

- g est le noyau de reconstruction universelle, c'est-à-dire, le noyau vectoriel de reconstruction universelle, qui dans l'espace de Fourier est donné par l'expression :

$$\vec{g}(k) = i \frac{k}{k^2}$$

et
- le symbole · signifie produit scalaire de convolution, c'est-à-dire, $(\vec{g} \cdot \nabla_C s)(x) = (g_x * \partial_{x,C} s)(x) + (g_y * \partial_{y,C} s)(x)$, où * signifie le produit de convolution ordinaire de fonctions,

dans lequel ledit mesurage de singularité est basé sur la différence entre la valeur de signal mesurée audit point x et la valeur de signal inférée pour ledit point x à partir de ladite formule de reconstruction, l'implémentation de ladite formule de reconstruction étant adaptée audit environnement local en la restreignant audit environnement local.

**20.** Système selon la revendication 19 **caractérisé en ce qu'**il comprend également des moyens pour réaliser au moins une transformation logarithmique sur ledit mesurage de reconstructibilité qui supprime la dépendance du nombre de points du signal, ce qui fournit un exposant de singularité pour chaque point du signal.

**21.** Système selon la revendication 20, **caractérisé en ce qu'**il comprend en outre :

des moyens pour obtenir une fonction dérivée stable du signal numérique échantillonné à intervalles réguliers, et des moyens pour obtenir pour chaque point dudit signal numérique échantillonné un mesurage de singularité du signal à ce point, en pondérant les contributions dudit environnement local du point et la valeur de ladite dérivée stable à tous les points dudit environnement local.

**Fig 1**

**Fig 2**

Fig 3

Fig 4

**Fig 5**

Fig 6

**Fig 7**

Fig 8

**Fig 9**

**Fig 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5901249 A
- US 6141452 A
- US 6865291 A
- US 6434261 A
- US 7181056 A
- US 7062085 A
- US 20050259889 A
- WO 2004068410 A
- US 6745129 A

### Non-patent literature cited in the description

- **TURIEL, Antonio et al.** Reconstructing Images from their Most Singular Fractal Manifold. *IEEE Transactions on image processing,* 01 April 2002, vol. 11 (4
- Wavelets. Theory and applications. ICASE/LaRC Series in Computational Science and Engineering. Oxford University Press, 1996, 349
- **A. Arneodo ; F. Argoul ; E. Bacry ; J. Elezgaray ; J. F. Muzy.** Ondelettes, multifractales et turbulence. 1995
- **U. Frisch.** Turbulence. Cambridge Univ. Press, 1995
- **S. Mallat.** A theory for multiresolution signal decomposition: the wavelet representation. *IEEE Transaction on Pattern Analysis and Machine Intelligence,* 1989, vol. 11, 67-93
- **S. Mallat ; W. L. Huang.** Singularity detection and processing with wavelets. *IEEE Trans. in Inf. Th.,* 1992, vol. 38, 617-643
- Wavelet transform maxima and multiscale edges. **S. Mallat ; S. Zhong et al.** Wavelets and their applications. Jones and 8artlett, 1991
- **D. Marr.** Vision. Freeman and Co, 1982
- On the singularity structure of fully developed turbulence. **G. Parisi ; U. Frisch.** Turbulence and Predictability in Geophysical fluid Dynamics. Pro. Intl. School of Physics E. Fermi. 1985, 84-87
- **O. Pont ; A. Turiel ; C. Perez- Vicente.** Application of the microcanonical multifractal fonnalism to monofractal systems. *Physical Review E,* 2006, vol. 74, 061110
- **Z. R. Struzik.** Determining local singularity strengths and their spectra with the wavelet transfonn. *Fractals,* June 2000, vol. 8 (2), 163-179
- **A. Turiel.** Relevance of multifractal textures in static images. *Electronic Letters on Computer Vision and Image Analysis,* 2003, vol. 1 (1), 35-49
- **A. Turiel ; A. del Pozo.** Reconstructing images from their most singular fractal manifold. *IEEE Trans. Im. Proc.,* 2002, vol. 11, 345-350
- **A. Turiel ; J. Isern-Fontanet ; E. Garcia-Ladona ; J. Young.** Detection of wave fronts in the Indian Ocean from geostationary sunglint satellite imagery. *Próxima aparición en el International Journal of Remote Sensing,* 2007
- **A. Turiel ; N. Parga.** The multi-fractal structure of contrast changes in natural images: from sharp edges to textures. *Neural Computation,* 2000, vol. 12, 763-793
- **A. Turiel ; C. Perez- Vicente.** Multifractal geometry in stock market time series. *Physica A,* May 2003, vol. 322, 629-649
- **A. Turiel ; C. Perez- Vicente.** Role of multifractal sources in the analysis of stock market time series. *Physica A,* September 2005, vol. 355, 475-496
- **A. Turiel ; C. Perez- Vicente ; J. Grazzini.** Numerical methods for the estimation of multifractal singularity spectra on sampled data: a comparative study. *Journal of Computational Physics,* July 2006, vol. 216 (1), 362-390
- **J. H. van Hateren ; A. van der Schaaf.** Independent component filters of natural images compared with simple cells in primary visual cortex. *Proc. R. Soc. Lond.,* 1998, vol. B265, 359-386